(19) **Europäisches Patentamt European Patent Office Office européen des brevets**

(11) **EP 1 739 531 A1**

(12) **EUROPEAN PATENT APPLICATION**

(43) Date of publication:
**03.01.2007 Bulletin 2007/01**

(51) Int Cl.:
**G06F 3/033** *(2006.01)*

(21) Application number: **06114892.0**

(22) Date of filing: **02.06.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **27.06.2005 FR 0551777**

(71) Applicant: **ITT MANUFACTURING ENTERPRISES, INC.**
**Wilmington,**
**Delaware 19801 (US)**

(72) Inventors:
• **Bricaud, Hervé**
  **39100 Dole (FR)**
• **Gavignet, Julien**
  **25320 Chemaudin (FR)**
• **Pizard, Yves**
  **39100 Dole (FR)**

(74) Representative: **Kohn, Philippe**
**Cabinet Philippe Kohn,**
**30, rue Hoche**
**93500 Pantin (FR)**

(54) **Ball-based device for controlling the movements of a cursor on a screen**

(57) The invention proposes a device (20) comprising a ball (30), rolling elements (56) for guiding the ball (30), a light source (112) for emitting at least one incident light beam through a window, a sensor of the image of the illuminated zone of the ball (30), characterized in that the device (20) comprises at least one validation switch (60-94-96) on which the user is likely to act by depressing the ball (30) which acts on the validation switch by means of a rolling element (56) that is interposed axially between the ball (30) and the member (60) for triggering the switch.

Fig. 2

Description

**TECHNICAL FIELD OF THE INVENTION**

The present invention relates to a ball-type control device.

The invention relates more particularly to a control device, particularly for controlling the movements of a cursor on a screen of an electronic apparatus, comprising an actuation member in the form of a spherical ball which delimits a convex spherical surface capable of being manipulated by a user.

The present invention relates particularly to a control device of the type commonly called "trackball" when the detection surface is manipulated directly by the fingers or the hand of the user, or relates also to a mouse, when the surface of the ball is manipulated indirectly by the user who moves a casing causing the detection surface of the ball to roll on a flat surface, for example a mouse mat.

The invention relates more particularly to a control device of the "optical" type comprising a ball casing that delimits a concave face that surrounds at least a portion of the ball, and that comprises at least one window for light beams to pass through, rolling elements, such as spheroids for example, for the guidance in rotation of the ball, that protrude through the concave face of the casing and on which the ball, when it is manipulated, rolls in order to rotate about its centre, a light source to emit at least one incident light beam through the window and towards the ball, and finally means, comprising particularly a lens and a sensor, to capture the image of the zone of the ball illuminated by the light beam.

**STATE OF THE ART**

Such a general design is known from document DE-A-3.407.131 published in 1985 that describes a mouse whose ball is mounted so as to rotate in a ball casing, or shell, in which it is guided in rotation by spheroids each of which is itself received in a matching cavity on the concave surface of the shell that houses the ball.

The device described and represented in this document comprises two sets of light-emitting diodes and optical sensors that form the optical means for detecting any rotary movement of the ball about its centre in order to convert these rotary movements into electronic signals.

Accordingly, the convex spherical surface of the ball comprises an even and evenly distributed pattern over the whole surface of the ball that is illuminated at least partly and whose image is captured by the sensors then analysed by known image processing means.

Such a design is particularly advantageous because, with a particularly small number of components, it makes it possible to detect and analyse the rotary movements of the ball without elements in contact with the ball, the only moving mechanical component consisting of the ball itself.

The casing of the device, in this instance of the mouse, also comprises, on the outside, keys for actuating various switches that can be actuated by the fingers of the user who is manipulating the mouse, for example for transmitting signals, for example for validating a position of a cursor on a computer screen.

The switches and their associated keys are independent and naturally do not interfere with the function of the actual detection ball so that any actuation of a key does not interfere with the operation of the ball and particularly does not cause the generation of spurious signals in the context of detecting the rotation of the ball.

The independence of the keys and the ball is also such that the keys can be actuated when the mouse is immobile, just as much as when the mouse is moving, that is to say when the ball is being rotated about its centre.

Such a design making use, for example for the actuation of at least one validation switch, of an additional actuation key or button necessarily increases the overall space requirement of the device and complicates its user-friendliness because the user has to be able, with one hand, to rotate the ball and operate the validation switch.

Depending on the arrangement of the various components and/or the dexterity of the user, in addition to the aforementioned disadvantages associated with the space requirement, this design may culminate in bad action coordination and/or fatigue of the user.

In addition, if it is desired to incorporate a device of this type in the form of a trackball into an electronic apparatus of small dimensions, such as for example a telephone called "mobile" or else a Personal Digital Assistant (PDA), the ball then has a very small diameter to be manipulated by a single finger of the user and holding the apparatus in the hand prevents any actuation of an independent switch without having to let go of the ball.

Furthermore, when incorporating such a trackball in the passenger compartment of a motor vehicle to control various functions, it is also desirable that the attention of the driver using the trackball is less held by the use of the trackball and particularly that he does not have to move his hand unnecessarily, particularly in order to find a key or a button for actuating a validation switch.

**SUMMARY OF THE INVENTION**

In order to remedy these disadvantages, the invention proposes a control device of the type mentioned hereinabove, such as for example an "optical" trackball, characterized in that it comprises at least one switch, particularly for validating a position of the cursor on the screen, on which the user is likely to act by depressing the ball, and in that the ball is mounted so that it can move relative to the casing, along an axis of depression passing substantially through the centre of the ball, to act on the validation switch by means of one of the rolling elements for the guidance in rotation of the ball that is interposed axially between the ball and the member for triggering the switch.

Thus, there is a control device, such as for example an optical trackball allowing its user to apply a function for example of validation by means of a switch that is incorporated into the device and whose actuation is performed by acting directly on the ball.

Thus, thanks to the design according to the invention, the device comprises no actuation key or button made in the form of an independent component, the member for direct actuation of the switch being the ball itself.

In addition to its very great user-friendliness, such a control device, also called a "navigator", making it possible in particular to move a cursor on a screen and/or to scroll down menus, is particularly compact and can be easily incorporated into a steering wheel and/or into a central control zone situated between the front seats of a motor vehicle or, for miniaturized versions, into apparatus of the "mobile or portable" telephone type while offering more functions and services making use in particular of choices proposed on one or more screens, in a manner similar to the use of a portable computer.

According to other features of the invention:

- the elements for guiding the ball in rotation consist of three guide elements that are situated substantially in one and the same plane orthogonal to the axis of depression of the ball and that are distributed angularly at 120 degrees about the axis of depression;
- the device comprises three switches on which the user is likely to act by depressing the ball along the said axis of depression, and each of the said three guide elements is interposed axially between the ball and the member for triggering an associated switch;
- the axis of depression of the ball passes through the said window;
- the axis of depression of the ball is common to the optical axis of the said means for capturing the image of the illuminated zone of the ball;
- each element for guiding the ball in rotation is a rolling guide spheroid;
- each guide element that is interposed between the ball and the member for triggering the associated switch is guided so as to slide in the casing in a direction parallel to the axis of depression of the ball;
- each spheroid is guided so as to slide in a tubular duct of the casing;
- the electric switch, particularly for validating a position of the cursor on the screen, comprises at least two fixed contact pads and a trigger member of generally convex shape that is elastically deformable, from a stable rest position, under the action of an axial depression force applied to the ball, to establish an electric connection between the two fixed contact pads;
- the trigger member delimits a cavity in the shape of a hollow spherical cap which receives a portion of the associated rolling guide spheroid;
- the fixed contact pads of each switch are supported by the top face of a printed circuit board that belongs to an optical module comprising a light source and the means for capturing the image, and that is attached to the casing;
- the stiffnesses of the trigger members of at least two of the three switches on which the user is likely to act by depressing the ball have different values so that the vertical action on the ball is likely to then cause successively, and distinctly, the triggering of the said at least two electric switches;
- the device comprises sealing means, to prevent foreign bodies from entering the device and to clean the surface of the ball during the rotary movements of the latter;
- the sealing means comprise at least one top elastic washer that exerts an elastic force directed vertically downwards onto a flexible washer that performs the function of a wiper seal on the surface of the ball at the base of its portion emerging from the casing.

## BRIEF DESCRIPTION OF THE FIGURES

Other features and advantages of the invention will appear on reading the following detailed description for the comprehension of which reference should be made to the appended drawings in which:

- Figure 1 is an external view in perspective, from above and from three-quarters front right, that represents a control device according to the teachings of the invention;
- Figure 2 is an exploded view in perspective and on a smaller scale of the various components of the device of Figure 1;
- Figure 3 is a view similar to that of Figure 1 in which the device is represented without its top cover;

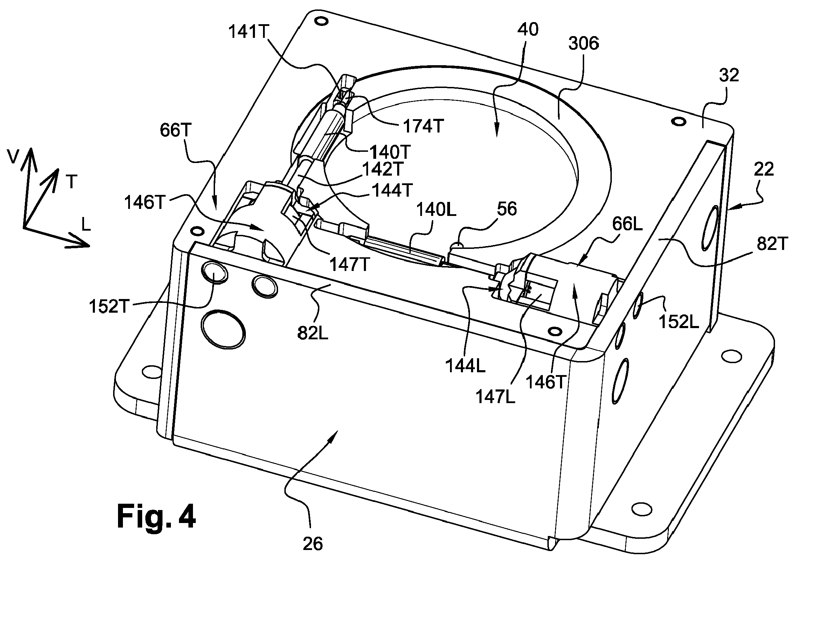

- Figure 4 is a view similar to that of Figure 3 in which the device is illustrated without the operating ball or the sealing means;
- Figure 5 is a view similar to that of Figure 4, from another viewing angle in perspective and in which the device is illustrated without its bottom cap;

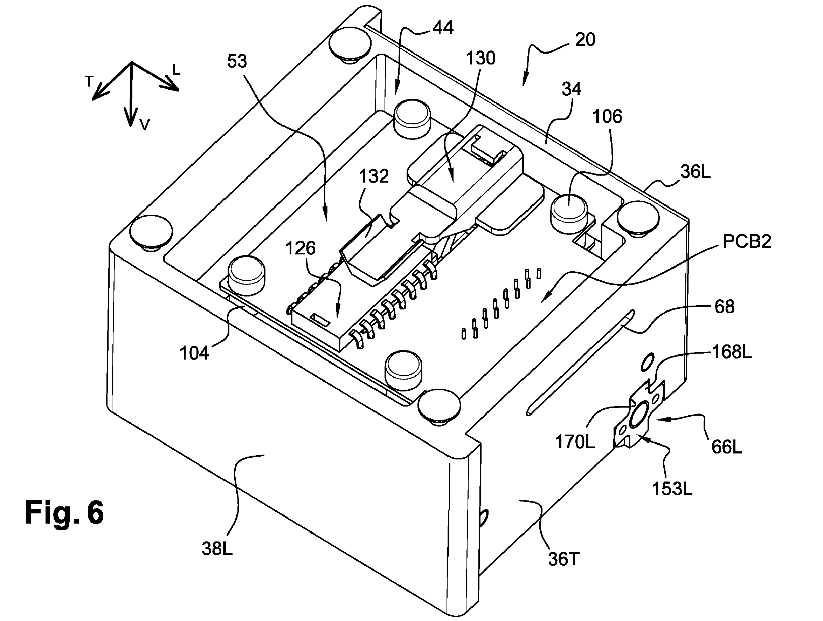

- Figure 6 is a bottom view in perspective of the device illustrated in Figure 5;
- Figure 7 is a top view of the device illustrated in Figure 4;
- Figures 8 to 11 are views, on a larger scale, in section along the lines 8-8 to 11-11 of Figure 7;
- Figure 10D is a view on a larger scale of the detail "D" of Figure 10;
- Figure 11 D is a view on a larger scale of the detail "D" of Figure 11;
- Figure 12 is a view similar to that of Figure 5 that represents the plastic insulating casing of the device;
- Figure 13 is a bottom view of the casing shown in Figure 12;

- Figure 14 is an exploded view in perspective of the various components forming the bottom module of the device;

- Figure 15 is a top view in perspective and from three-quarter front left of the bottom module in which the three members for triggering the three validation switches are also represented;

- Figure 16 is a bottom view in perspective of the bottom module of Figure 15;

- Figure 17 is a bottom view of the bottom module;

- Figure 18 is a view in section along the line 18-18 of Figure 17;

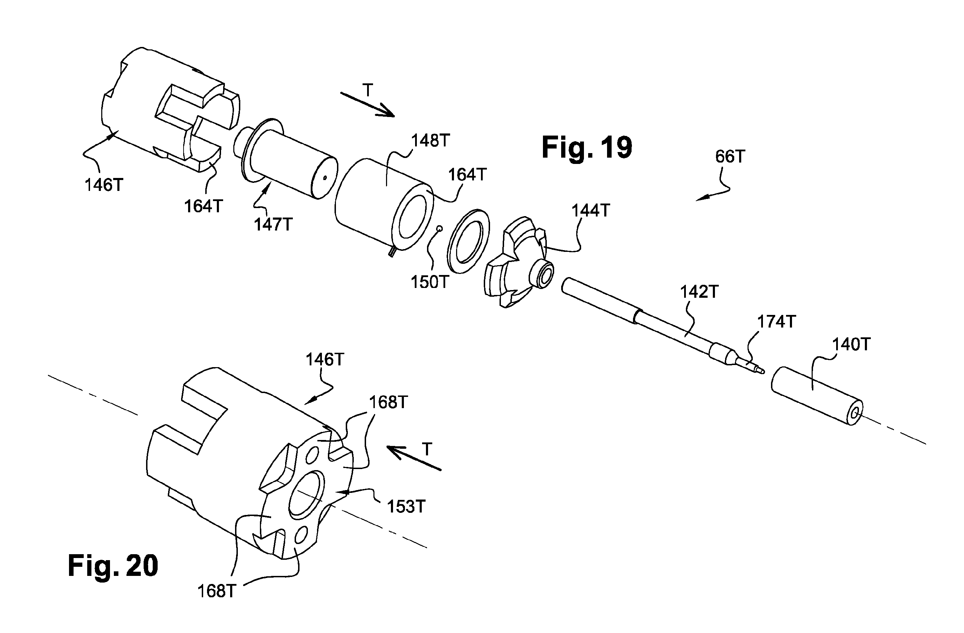

- Figure 19 is an exploded view in perspective of the components of one of the two tactile sensation generators fitted to the device;

- Figure 20 is a view in perspective of the detail of one of the components of the generator of Figure 19;

- Figure 21 is a bottom view in perspective of the top cover of the device;

- Figures 22A and 22B are views in perspective on a large scale of a member for triggering one of the validation switches;

- Figure 23 is a view in perspective of a second embodiment of a tactile sensation generator;

- Figure 24 is a side view of the generator of Figure 23;

- Figure 25 is a view in section along the line 25-25 of Figure 24;

- Figure 25D is a view on a large scale of the detail D of Figure 25;

- Figure 26 is an axial end view of the generator of Figure 25;

- Figure 27 is an exploded view in perspective of the generator of Figure 23;

- Figure 27D is a detail view that illustrates the various components of the Cardan articulation joint of Figures 23 and 27;

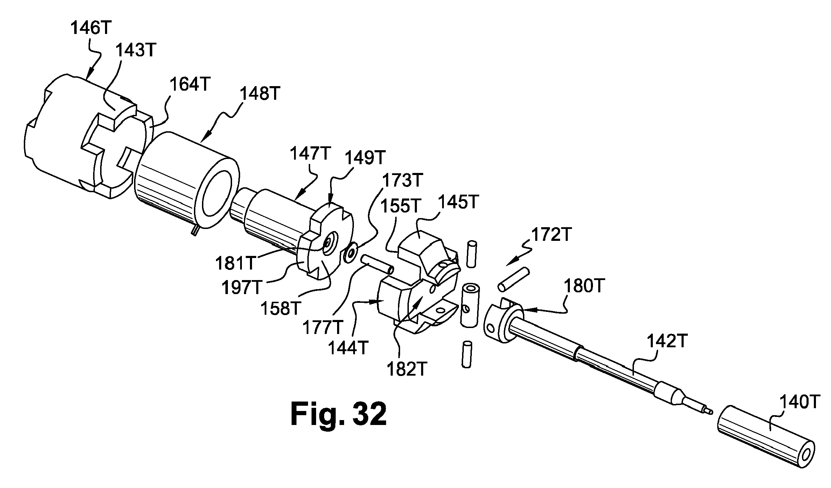

- Figures 28 to 32 are views similar to those of Figures 23 to 27 that illustrate a third embodiment of a tactile sensation generator;

- Figures 33 and 34 are views in perspective on a larger scale of the rotor of the tactile sensation generator illustrated in Figures 28 to 32;

- Figures 35, 35D, and 36 to 38 are views similar to those of Figures 30, 30D, and 32 to 34 that illustrate a fourth embodiment of a tactile sensation generator;

- Figures 39, 39D and 40 are views similar to those of Figures 35, 35D and 36 that illustrate a fifth embodiment of a tactile sensation generator;

- Figure 41 is a schematic view in section of yet another embodiment of a tactile sensation generator;

- Figures 42A and 42B are two detailed views on a larger scale similar to Figure 25D that illustrate a first variant embodiment of the electromagnetic means respectively in the " tactile sensation production" position and the "stuck" position;

- Figures 43A and 43B are two detailed views on a larger scale similar to Figure 30D that illustrate, respectively in the " tactile sensation production" position and in the "stuck" position, a variant embodiment of the electromagnetic means.

**DETAILED DESCRIPTION OF THE FIGURES**

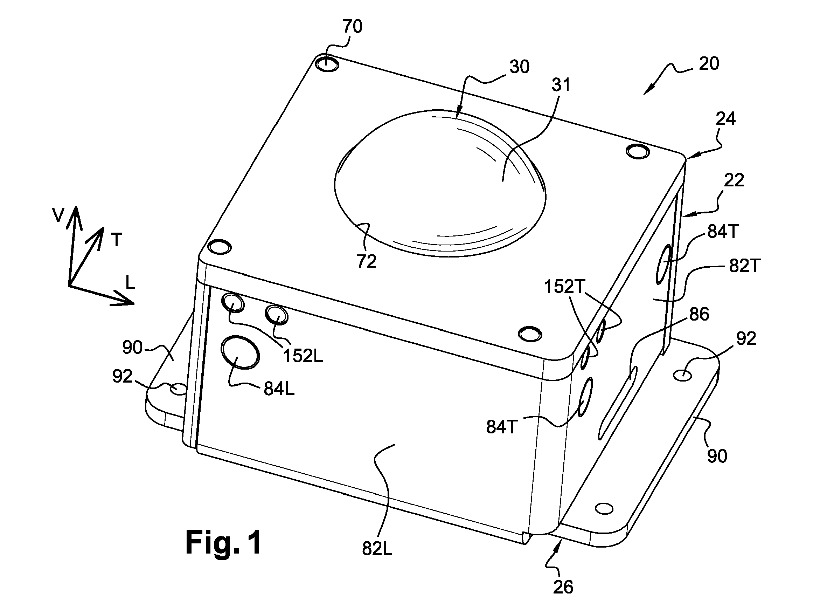

For the description of the invention, the vertical, longitudinal and transverse orientations will be adopted in a non-limiting manner according to the V, L, T indication in Figure 1.

By convention, the terms bottom, top, front, rear, and left, right will also be adopted with reference to Figure 1.

In the following description, identical, similar or analogous elements will be indicated by the same numeric or alphanumeric references.

In the embodiment illustrated in the figures, the control device is a ball device, also called a "trackball".

The device 20 essentially comprises a central control or operating ball or sphere that is housed in a casing 22 of a general shape that is substantially a rectangular parallelepiped that is closed by a top cover 24 and by a bottom cap 26.

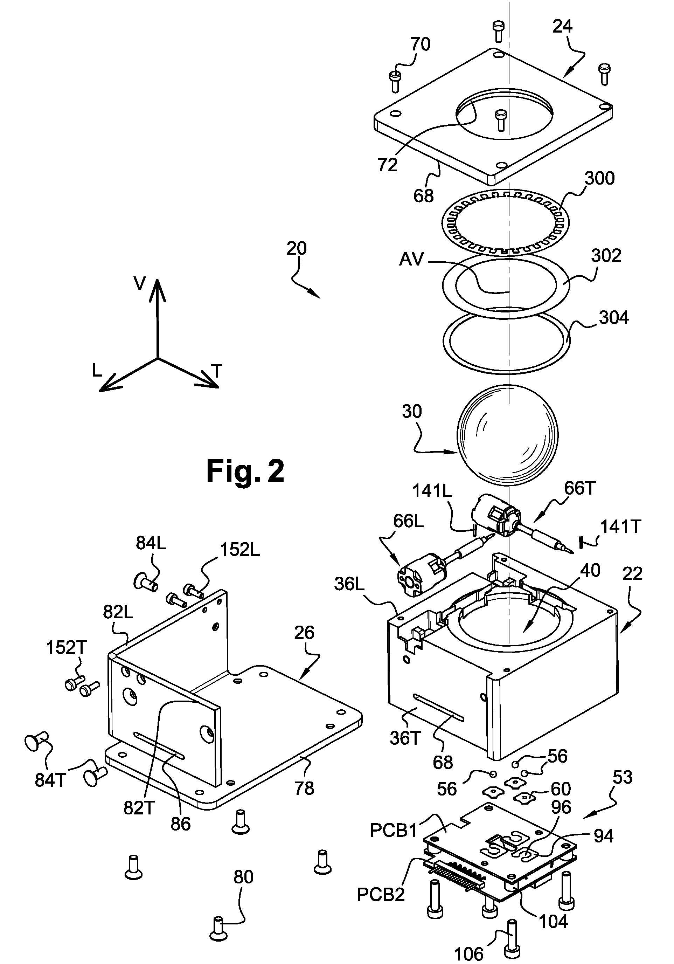

All the components of the device 20 are, as can be seen in particular in Figure 2, stacked axially along the main vertical axis AV that passes through the centre C of the ball 30 and that also forms the axis of depression of the ball.

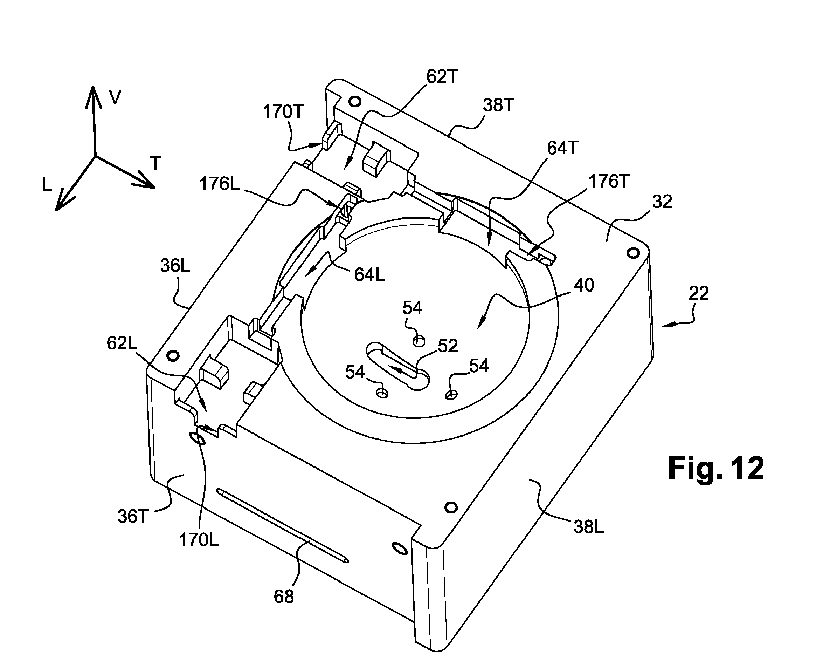

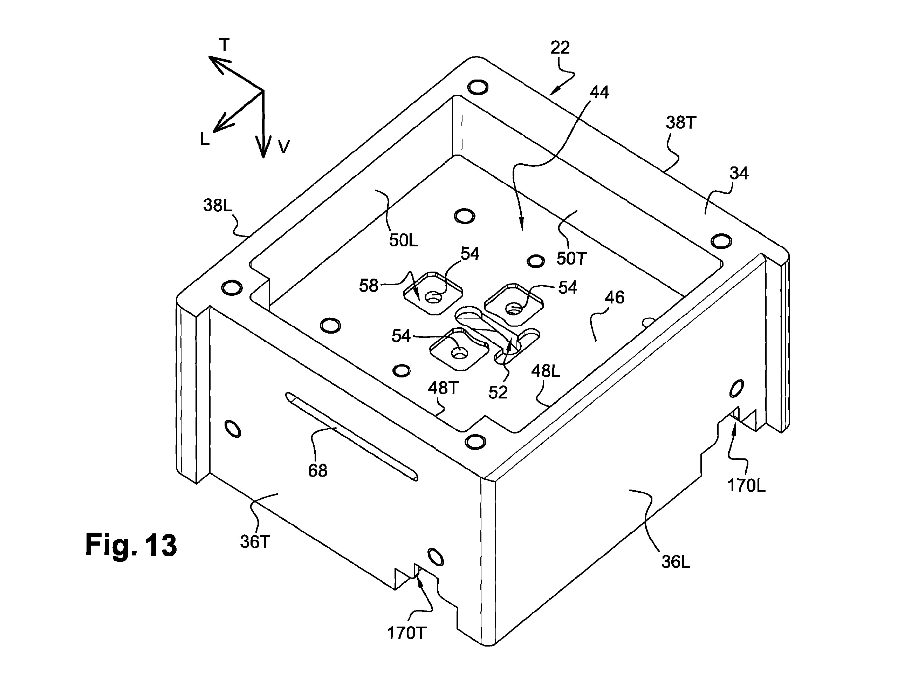

As can be seen in particular in greater detail in Figures 12 and 13, the casing 22 is a moulded piece, for example made of electrically insulating plastic, that is delimited by a horizontal top face 32 and a horizontal bottom face 34.

As will be explained hereinafter, the device 20 is fitted, on the top portion, with two tactile sensation generators that are of identical design and that are arranged along two horizontal axes, longitudinal AL and transverse AT.

Thus, the elements and components that are identical, similar or analogous of the tactile sensation generators and that are associated therewith will be indicated by the same reference numbers indexed "L" and "T" respectively.

The casing 22 is also delimited by its longitudinal vertical side faces 36L and 38L and by its transverse vertical side faces 36T and 38T.

In its top face 32, the casing 22 delimits a cavity 40 of a generally hemispherical shape that is delimited by a concave hemispherical face 42.

The cavity 40 houses a little more than the bottom half of the ball 30 that it surrounds thus partially and, in the normal position of use of the ball and as will be explained hereinafter, there is a radial clearance between the outer convex spherical peripheral surface 31 of the ball 30 and the concave face 42 of the cavity 40.

In its bottom face 34, the casing 22 delimits a bottom housing 44, vertically open downwards, that is of generally rectangular parallelepipedic shape and that is delimited by a top horizontal wall 46 and by vertical side faces 48L, 48T, 50L and 50T.

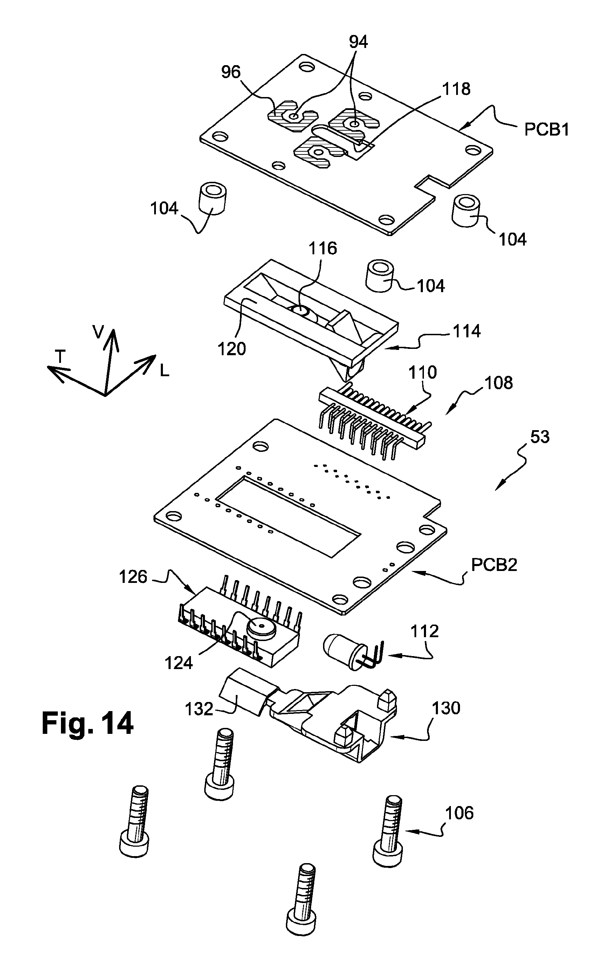

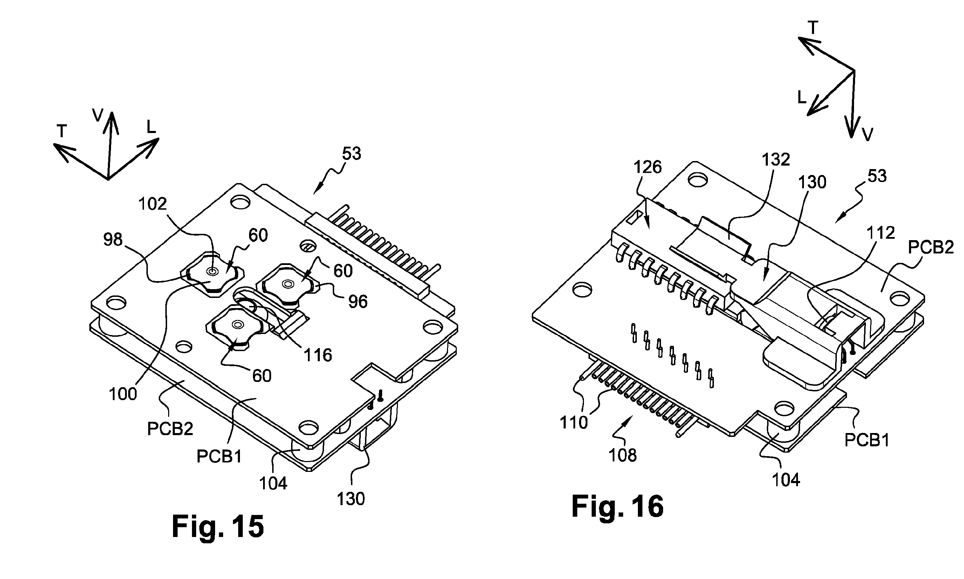

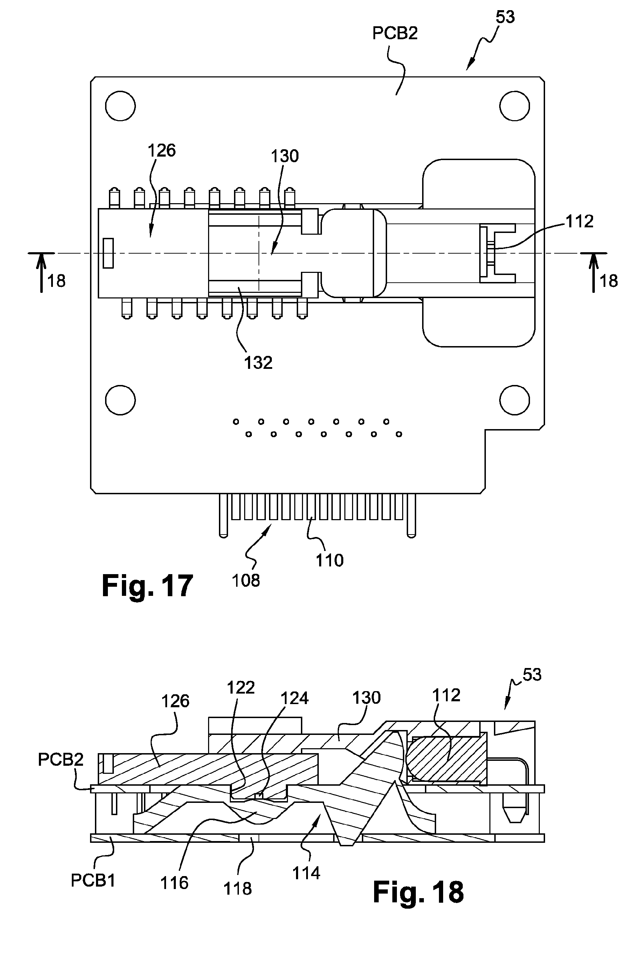

The bottom housing 44 receives all the components of a bottom module 53 for detecting the rotary movements of the ball 30, for processing the signals and for controlling the tactile sensation generators, that is particularly illustrated in Figures 14 to 18.

The casing 22 is traversed vertically in its thickness by an oblong central slot 52 of transverse orientation and by three vertical tubular ducts 54.

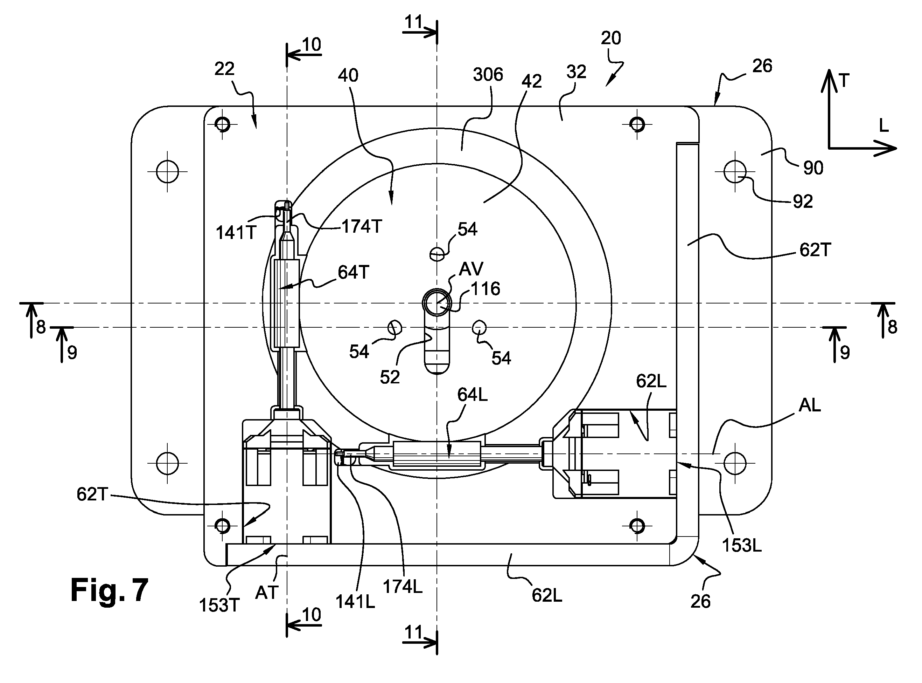

As can be seen in particular in Figure 7, the three ducts 54 are distributed symmetrically and angularly in an even manner at 120° about the central axis AV, their axes forming an equilateral triangle.

Like the slot 52, each tubular duct 54 is open vertically at its two opposite ends and receives, slidingly in the vertical direction under the action of the ball 30, a rolling and/or sliding spheroid 56.

The three spheroids 56 guide the ball 30 in rotation and accordingly they normally protrude vertically through the concave face 42 of the cavity 40.

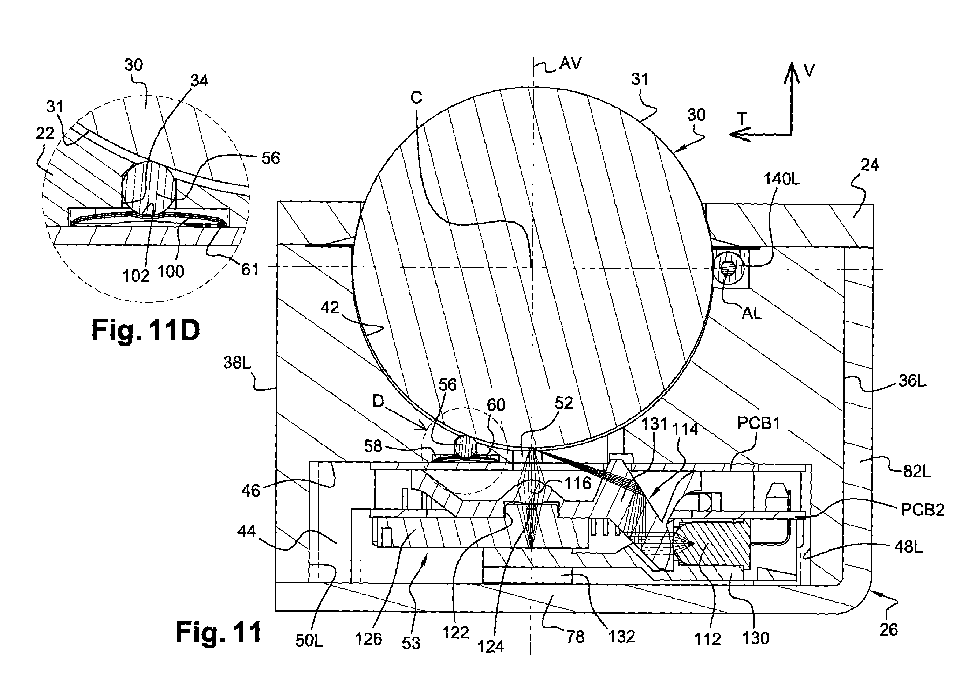

The top end of each tubular duct 54 has a slightly reduced diameter in order to hold the associated spheroid 56 in the duct while the ball 30 is not in place, as can be seen in Figure 11 D.

Thus, the ball rolls or slides normally on the three spheroids 56 to rotate about its centre C.

As can be seen in particular in Figure 13, each tubular duct 54 opens into the top wall 46 of the housing 44 at the centre of an associated housing 58 that is shallow and has a substantially square contour.

Each square housing 58 is designed to receive a trigger member 60, that is of matching shape and that will be described in greater detail hereinafter, that belongs to a validation switch.

In its top face 32, the casing 22 again comprises two housings 62T-64T and 62L-64L that are vertically open upwards and that each receive a tactile sensation generator 66T, 66L.

The casing 22 again comprises a horizontal side slot 68 that opens at both its ends in the longitudinal direction through the faces 36T and 48T.

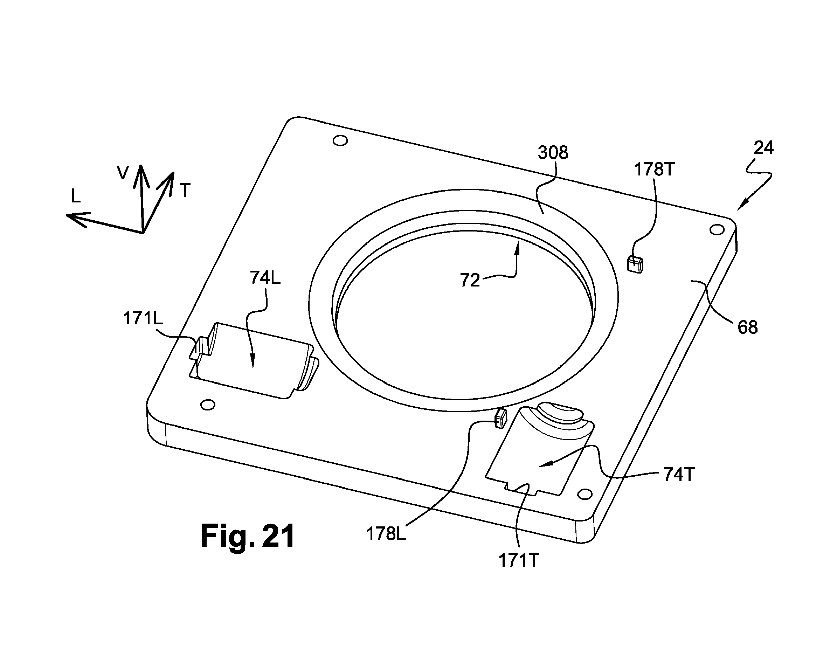

The top portion of the casing 22 is closed by the cover 24 which, as can be seen in particular in Figure 21, is a piece moulded in insulating plastic in the general shape of a plate with a rectangular contour whose bottom horizontal face 68 presses vertically on the top face 32 of the casing 22 onto which the cover 24 is attached for example by screws 70.

The cover 24 is pierced with a vertical circular hole 72 for the top emergent portion of the ball 30 to pass through.

The cover thus performs a function as a top retainer of the ball in elastic contact on the three spheroids 56.

The bottom face 68 also comprises two housings 74T and 74L matching the housings 62T and 62L.

In its bottom portion, the casing 22 again comprises an oblong horizontal slot 76 which opens longitudinally in the vertical side faces 36T and 48T.

The bottom portion of the casing 22, and particularly the housing 44, is closed off vertically in the downward direction by the bottom cap 26 that is a thick piece of metal sheet and that comprises for this purpose a bottom horizontal plate 78 of a shape matching that of the bottom face 34 of the casing 22 and to which the plate 78 is attached by four vertical screws 80.

Besides its function of closing the bottom portion of the casing 22 via the plate 78, the metal cap 26 also serves as a heat exchanger, that is to say, on the one hand, as a heat conductor between the hot points, such as for example the yokes of the electromagnetic tactile sensation generators, any electric components with heavy heat dissipation and the cold point or points such as the frame to which the cap 26 made of metal (or of any other material that is a good conductor of heat such as the ceramic-based materials) is attached, and, on the other hand, as a heat sink via its external surface, as will be explained hereinafter and, for this purpose, its heat exchange capacity with the outside is increased thanks to the two vertical side plates 82T and 82L that are made by bending, formed in a single piece with the bottom plate 78.

The plate 82L is adjacent to the side face 36L of the casing 22 to which it is attached by a horizontal screw 84L, while the vertical plate 82T is adjacent to the side face 36T to which it is attached by two horizontal screws 84T.

The plate 82T comprises a horizontal slot 86 opening opposite the horizontal slot 66 of the casing 22.

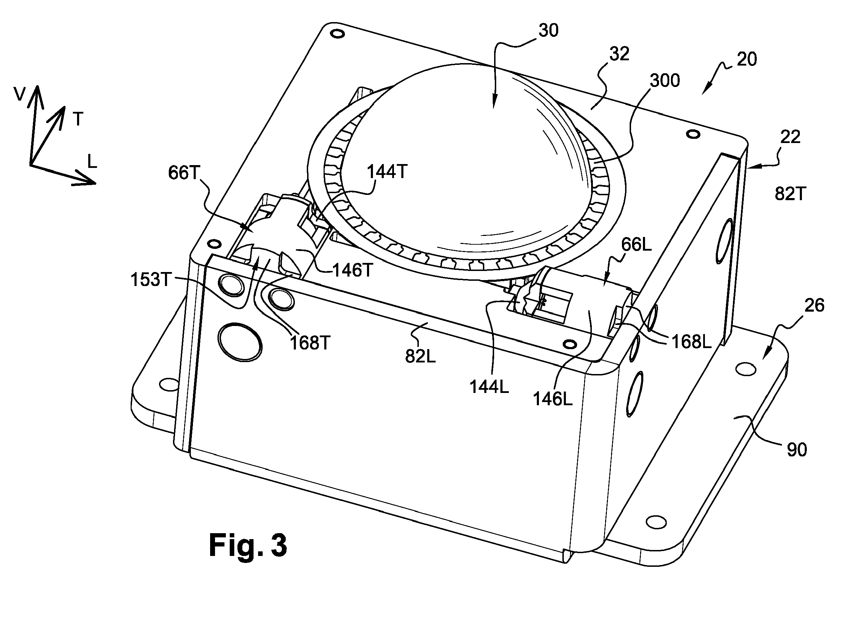

As can be seen in particular in Figures 3 and 13, the shapes of the casing 22 and the thicknesses of the vertical plates 82T and 82L are such that the device 20 has a substantially continuous side contour.

As can also be seen for example in Figure 1, the bottom plate 26 extends longitudinally either side of the casing 22 to form two side wings 90 comprising holes 92 for fastening the device 20 in an electronic apparatus (not shown).

To improve the cooling of the components supported by the printed circuit boards described hereinafter, and particularly by the bottom plate, and particularly for the components with heavy heat dissipation, certain portions of these components may be connected directly to the plates facing the cap 26, for example by screws.

Now the bottom module 53 housed in the bottom housing 44 will be described in greater detail.

The module 53 is an "optical" or "optoelectronic" module for detecting the rotary movements of the ball 30 about its centre.

The optical and image processing principles by reflection of the light on the convex peripheral surface 31 of the ball that are used in the device 20 are of a generally known design and do not form part of the present invention.

All that will be mentioned is that these principles consist in illuminating the surface 31 of the ball 30 whose surface state is perfectly smooth and has, as for example in document DE-A-3.407.131, a regular pattern distributed evenly over the whole surface of the ball 30.

Thanks to the techniques of manufacturing the balls, it is accordingly possible, for example, to disperse in the peripheral layer of the material forming the ball, for example in the form of a powder, uniform pigmented grains that are distributed uniformly in a homogeneous and even manner and that produce the pattern on the surface of the ball, the material in which the grains are distributed being translucent for example.

Thus an optical navigation technology is used that consists in measuring the positional changes by optical acquisition of sequential surface images, and in mathematically determining the direction and amplitude of the movement.

Using pigmented grains provides a very great sharpness or sensitivity of detection making it possible, for example, to produce in the order of 2000 pulses per rotation of the ball whose diameter is 38 mm.

Naturally, such sensitivity is unnecessary, or even harmful, for many applications and the procedure is then, via signal processing, to "divide" the number of pulses by a division factor lying for example between 10 and 200 depending on the applications and the desired sensitivity.

There are no moving parts and it is not necessary to have great precision on the optical alignment.

The system for detecting rotation of the ball consists essentially of an optoelectronic component comprising an image acquisition system, via a lens and an "LED" diode that illuminates the surface of the ball, and a digital signal processor that generates the values of relative movement $\Delta x$ and $\Delta y$ that are then converted into signals on two channels.

Accordingly, the module 53 consists essentially of a top horizontal printed circuit board PCB1 and a bottom horizontal printed circuit board PCB2.

The top board PCB1 comprises, on its top face, three series of pairs of fixed contact pads arranged in the same disposition in an equilateral triangle as the housings 58 and the spheroids 56 received in the duct 54.

Each pair of pads comprises a central pad 94 and a peripheral pad 96 that surrounds the pad 94.

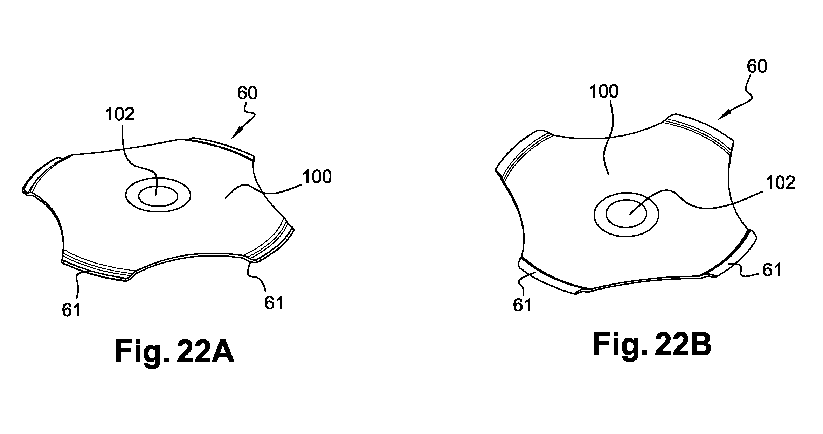

In a known manner, each trigger member 60, that is illustrated on a large scale in Figure 22, is a dome which here comprises, as a non-limiting example, four radial branches 61 in a star pattern each comprising an end 98 that rests in electrical contact on the peripheral pad 96.

It may also be of a simpler shape, round, rectangular, triangular, etc.

In the normal rest state of the member 60, its central portion 100 is situated vertically above and in line with the central pad 94.

The central portion 100 is shaped with a cup in the form of a spherical cap 102 whose convexity is oriented upwards and which receives an associated spheroid 56 for rolling and/or sliding depending on the values of the coefficients of friction of the spheroids with, on the one hand, the surface of the ball and, on the other hand, the surface of the domes and tubular ducts.

When a vertical force is exerted, oriented downwards on the spheroid 56, the central portion 100 with its spherical cap 102 leaves its high stable position, illustrated for example in Figure 11, to come to establish an electrical contact with the central pad 94 and thus establish an electric connection between the two fixed pads 94 and 96.

As soon as the trigger force applied on the central portion 100 is relaxed, the trigger member of the dome 60 returns to its stable state in which the cap is in the high position and in which the electric connection between the pads 94 and 96 is interrupted.

The three central pads 94 are, for example, connected to a common conductor track in the board PCB1, while each peripheral pad 96 is connected to a distinct associated track.

The connection of the tracks linked to the pads 94 and 96 with tracks of the bottom board PCB2 is made, in a known manner, by means of four tubular vertical spacers 104 preferably made of electrically conducting metal that are interposed between the boards PCB1 and PCB2.

The two boards PCB1 and PCB2, with the spacers 104, form a stack or sandwich that is assembled and attached beneath the top face 46 of the housing 44 by means of four vertical screws 106 which traverse the spacers 104 and which are screwed into the material of the casing 22.

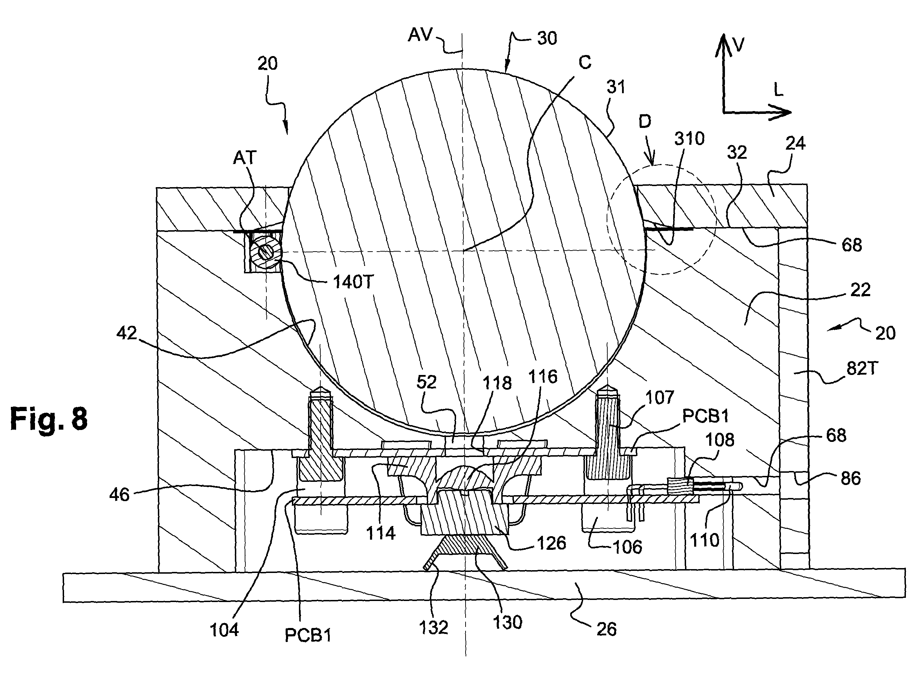

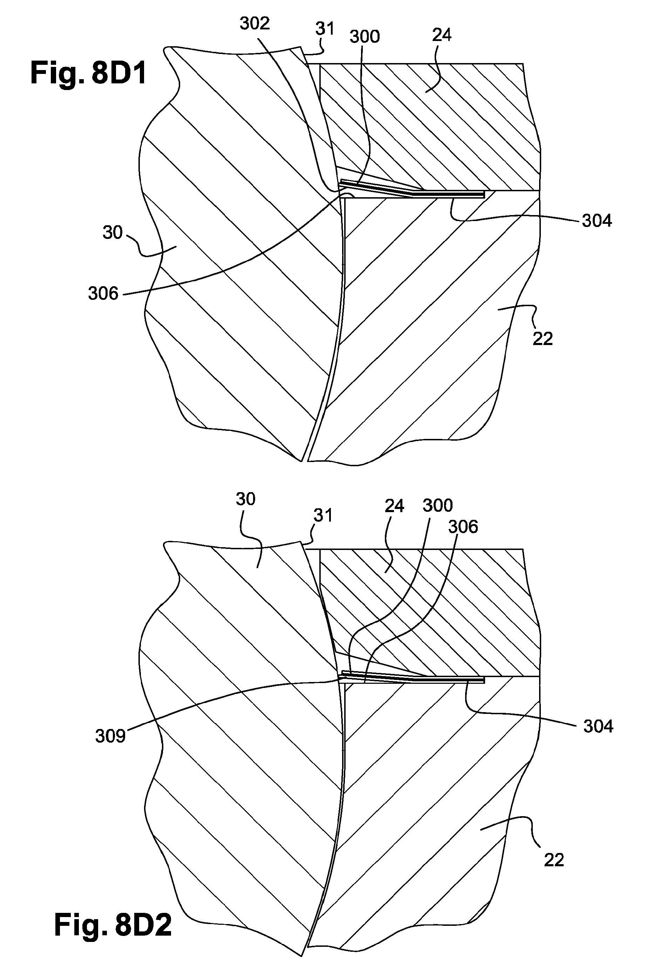

Thus, in the assembled position, and as can be seen in particular in Figures 8, 9 and 11, the top face of the top board PCB1 is pressed against the top face 46 of the housing 44 and positioned so that each pair of pads 94, 96 is situated opposite a housing 58 with a trigger member 60 "trapped" in the housing 58 so as to form three switches 60-94-96 distributed in an equilateral triangle about the vertical axis AV and each of which is controlled by an associated spheroid 56.

The attachment of the board PCB1 is completed by two screws 107.

For electrically connecting the various components of the module 53 with the outside of the casing 22 and therefore of the device 20, the module 53 comprises a connector 108, of a generally known design, that is attached to the top face of the bottom board PCB2 and whose output pins 110 extend horizontally through the horizontal slot 68 so that an additional connector (not shown) can be connected to the connector 108 through the aligned slots 68 and 86 thus connecting the electrical switching components and optoelectronic detection components of the module 53 with the circuits of the electronic apparatus (not shown) fitted with the device 20.

The light source for illuminating the ball 30 is here an LED diode 112 attached beneath the bottom face of the bottom board PCB2.

The light emitted by the light source formed by the diode 112 is concentrated and guided by a block forming an optical guide 114 of complex shape which extends horizontally between the two boards PCB1 and PCB2.

The block 114 comprises a light guiding prism 131 which channels and directs the light emitted by the LED diode 112 to illuminate the lower pole of the ball around and in line with the axis AV.

The block 114 also comprises a central lens 116 that is oriented vertically upwards, whose vertical optical axis is one and the same with the axis AV so as to be substantially perpendicular to the illuminated zone of the surface of the ball, and that captures and focuses the image of the polar zone of the ball 30 illuminated by the prism 131 in the direction of the image acquisition system.

The lens 116 is aligned with the slot 52 of the casing to cause the image of the ball seen by the sensor through this slot to converge and the top board PCB1 comprises an oblong central cut-out 118 of transverse orientation aligned with the slot 52 of the casing.

The block 114 forming a light guide has its top horizontal face 120 pressed beneath the bottom face of the top board PCB1 and it comprises, vertically beneath the lens 116 and in line with the vertical optical axis of the latter, a blind cylindrical housing 122 that receives the sensitive element 124 belonging to a sensor, or image detector, 126.

The sensor 126 is attached beneath the bottom face of the bottom board PCB2 that comprises a rectangular central cut-out 128 for arranging the components, and particularly assembling the guide 114 with the sensor 126.

The lens 116 with the sensor 126 and its sensitive element 124 constitute the means for capturing the image of the illuminated lower polar zone of the ball.

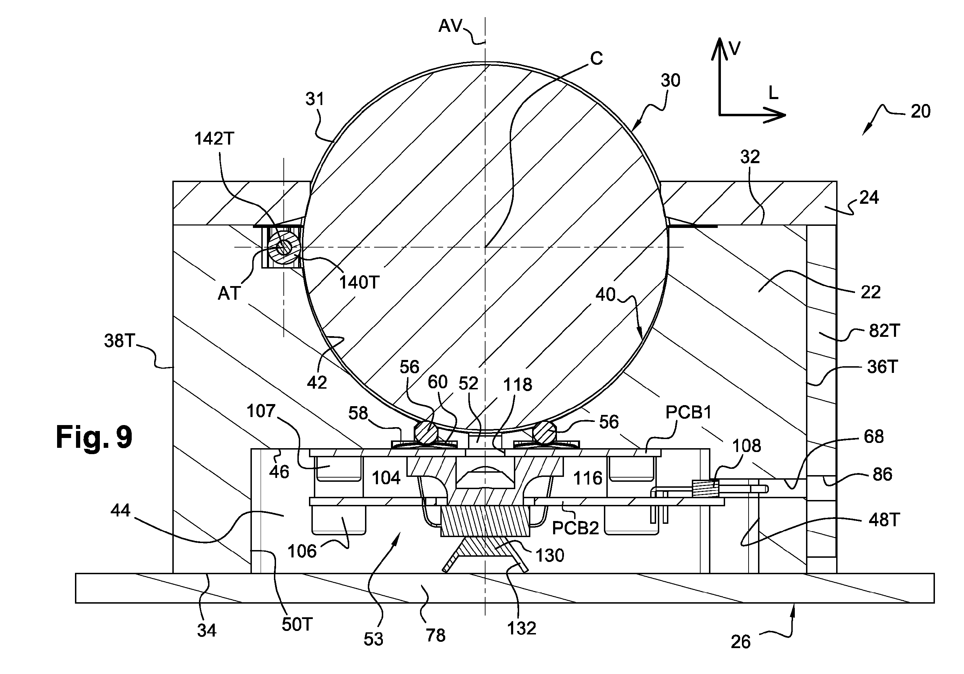

The module 53 finally comprises a bottom spacer 130, for assembling and positioning the various components, that comprises in particular two bottom wings 132 that press on the top face of the plate 78 of the metal cap 26 as can be seen, for example, in Figure 9.

The various components of the module 53 are, for example, available commercially from "AGILENT TECHNOLOGIES", 395 Page Mill Road in Palo Alto, California - USA, under the references ADNS-2051 (Solid-State Sensor Version 1.0), HDNS-2200 (Solid State Sensor Assembly Clip), HDNS62100#001 and HLMP-ED80 639nm (T1 3/4 LED).

The module 53 thus makes it possible to illuminate the ball via the lens 116 through the slot 52 and to capture, through the lens 116 and by means of the sensor 126, the image of the zone of the ball illuminated by the light beam emitted by the diode 112 through the first portion of the optical guide 114.

In the figures, the operating ball 30 is represented in its normal operating position in which it is rotated by the user.

During this rotation about its centre C, the ball 30 rolls, via its convex peripheral surface 31, on the rolling or sliding spheroids 56 that rotate about themselves each in its tubular duct 54 and in the associated spherical cap 102 of a trigger member 60.

The three spheroids 56 are coplanar in a horizontal plane and the dimensions and arrangements of the various components are such that there is a radial clearance between the surface 31 of the ball 30 and the surface 42 of the cavity 40.

The operating ball 30 thus rotates easily with the reduced friction and all its rotary movements about its centre C are detected by the bottom module 53 whose optical axis is the vertical axis AV passing through the centre C of the ball that is thus parallel with the vertical sliding axes of the spheroids 56 in their respective tubular ducts 54.

When the user desires to use the ball 30 as a member to actuate a validation switch or switches 60-94-96, he must vertically depress the ball by pressing generally vertically thereon.

Such a pushing or depression force on the ball 30 is transmitted to the three spheroids 56 on which the ball 30 rests.

Under the depression force, the spheroids 56 slide, vertically downwards, each in its associated tubular guide duct 54, to cause the elastic deformation of the associated trigger member 60.

This is how an electric switching function is performed by acting on the ball 30 by depressing the latter and by means of the rolling spheroids 56.

The global movement of the ball 30 during the "switching" travel is vertical along the vertical axis AV that is aligned with the optical axis of the bottom module 53.

Thus, during the switching or triggering travel of the ball 30 vertically downwards along the axis AV, the module 53 with its lens 116 detects no rotary movement of the ball 30 likely to produce a spurious signal representing its rotation since, relative to the lens 116, the ball does not rotate.

Thus, the use of the operating member formed by the ball 30 in order to obtain an instruction, for example for validation, by acting on the switch 60 produces no spurious signal in the module 53.

According to a first embodiment, the three trigger domes 60 are of identical design and their trigger actions are virtually simultaneous.

More precisely, when the cursor, which moves on the screen of the electronic apparatus according to the rotation of the ball, reaches the position aimed at by the user, the validation of this position (the "Select" function) is obtained thanks to a vertically oriented pressing force that is exerted by the user's finger or palm of the hand on the top, or upper pole, of the portion of the ball that protrudes, and that is oriented towards the centre C of the ball, vertically downwards.

This pressing or depression force is transmitted by the ball 30 to the switching trigger members 60 and it causes the change of state of at least one trigger member, also called the "collapsing" of the trigger member.

The change of state is reflected by a vertical collapse of the switching trigger member, and consequently by a vertical movement of the ball, of approximately 0.4 mm in the example described and represented, producing a mechanical detent effect that takes the form of a tactile effect that is transmitted, via the ball 30, to the user's finger or palm.

The change of state may also produce an audible "click".

This tactile effect coincides substantially with the end of the downwardly directed vertical travel of the assembly or package consisting of the ball and at least one trigger member, that is to say that corresponds substantially to the closure of the electric switch which produces a validation signal or "Select" signal.

So that the position thus "validated" corresponds to the position seen on the screen and chosen by the user just before the latter exerted the pressing or depression force on the ball 30, it is essential that, throughout the movement or vertical travel of the ball 30, the ball rotation detection system (whose optical sighting axis is oriented perpendicular to the surface of the ball) always "sees" the same pattern or the same pigmented grain of the superficial layer of the ball.

Thus, so that no apparent rotary movement of the ball is detected during the vertical validation travel, the detection system must be substantially in the vertical diametral axis of the device and of the ball, that is to say in the axis of vertical movement of the ball.

Since the upper pole of the ball is that on which the pressure of the user's finger or palm is exerted, the ball rotation detection system must be placed vertically beneath the ball, so that its optical sighting axis is oriented towards the lower pole of the ball, perpendicular to the surface 31 of the ball 30.

In order to ensure that this geometric arrangement remains constant during the actuation of the ball, the resultant of the forces exerted on the ball by the switching trigger members, in reaction to the vertical pressing force exerted by the user on the upper pole of the ball at the moment of validation, must pass through the lower pole.

Because it is not possible to position a single trigger member beneath the lower pole, since this space is occupied by the ball rotation detection system, use is preferably made of the configuration described and represented that comprises three similar trigger members the centres of each of which form the vertex of an equilateral triangle whose horizontal plane is traversed orthogonally by the vertical diametral axis of the ball 30, at the point corresponding to the barycentre of the equilateral triangle, that is also the point of convergence of its three altitudes.

The triangle configuration is particularly advantageous because:

- it makes it possible to keep clear the zone situated directly beneath the lower pole of the ball to allow the optical element for ball rotation detection to be placed therein;
- it provides a stable and precise positioning of the ball in the space, including during its vertical movement, thus preventing any phenomenon of hyperstaticity or hypostaticity;
- it offers the possibility of "cumulating" the effects of three trigger domes or members whose actuation forces are added together.

This is of particular value when the device of the trackball type comprises a ball 30 of large diameter, for example 38 mm in the example shown, because the larger the diameter of the ball, the greater must be the validation pressing force by depressing the ball to give the user a comfortable tactile sensation (that is more sensitive to the value of the pressure than to that of the actual force).

Furthermore, as the maximum values of the actuation or trigger forces of the domes are limited to ensure sufficient service lives for these trigger members, that is a large number of actuation cycles, it is therefore particularly advantageous to add together the forces of several domes to obtain the desired pressing force values for large diameter balls.

Thus, in the example described and represented, in which the diameter of the ball 30 is 38 mm:

- the validation pressing force must be of the order of 8 to 12N depending on the application to provide a comfortable tactile sensation;
- the three domes each comprise four radial legs or branches whose external dimensions lie within an 8.5 mm circle and a 7 mm square;
- the value of the actuation force of each of the domes may be chosen, depending on the model, between 2 and 4.5N;
- the length of the sides of the equilateral triangle, whose vertices correspond to the centres of the domes, is approximately 12 mm, thereby providing sufficient space to house the ball rotation detection device which, it will be noted, extends perpendicular to one side of the triangle between the barycentre of the triangle and a point outside the triangle substantially symmetrical to the barycentre relative to a side.

The three domes may each have an identical trigger force F, for example F equals 3N, in order to obtain a resultant pressing force of approximately 9N.

According to a variant, for one of the domes the force F1 equals 3N, and for the other two domes the forces F2 equals 4N so as to obtain two distinct trigger levels.

Finally, the three domes may each have a different trigger force F1, F2 and F3 so as to obtain three distinct trigger levels.

It is thus possible to provide three domes having different stiffnesses and the vertical action on the ball 30 is likely then to cause successively, and distinctly, the actuation or triggering of the three electric switches.

The user then has at his disposal a device 20 allowing him, besides controlling the movements of a cursor on a screen by rotating the operating ball 30, to selectively issue three electrical switching instructions by applying a greater or lesser depression force to the ball.

The tactile sensation generators 66L, 66T are independent of the ball rotation detection means, that is to say that they comprise no component that is common with the detection means.

The tactile sensation generators 66L and 66T each essentially consist of a front roller 140L, 140T that permanently interacts by friction with the surface 31 of the ball 30 and that is connected in rotation to a generator shaft 142L, 142T, whose rear axial end is connected in rotation to a rotor 144L, 144T which belongs to electromagnetic means capable of attracting and/or retaining the shaft 142L, 142T in a determined angular position and which also comprise a stator body 146L, 146T comprising a tubular yoke which houses a tubular winding 148L, 148T which itself surrounds a central core 147L, 147T.

The casing 22 naturally comprises holes, not shown, through which two pairs of conductor wires supplying the windings can pass.

These four wires are connected to the bottom printed circuit board which also supports electronic components for the control of the tactile sensation generators.

A centring and articulation spheroid 150L, 150T is interposed axially between the rotor 144L, 144T and the core 147L, 147T. The diameter of the spheroid is, for example, of the order of 1 mm in the example illustrated.

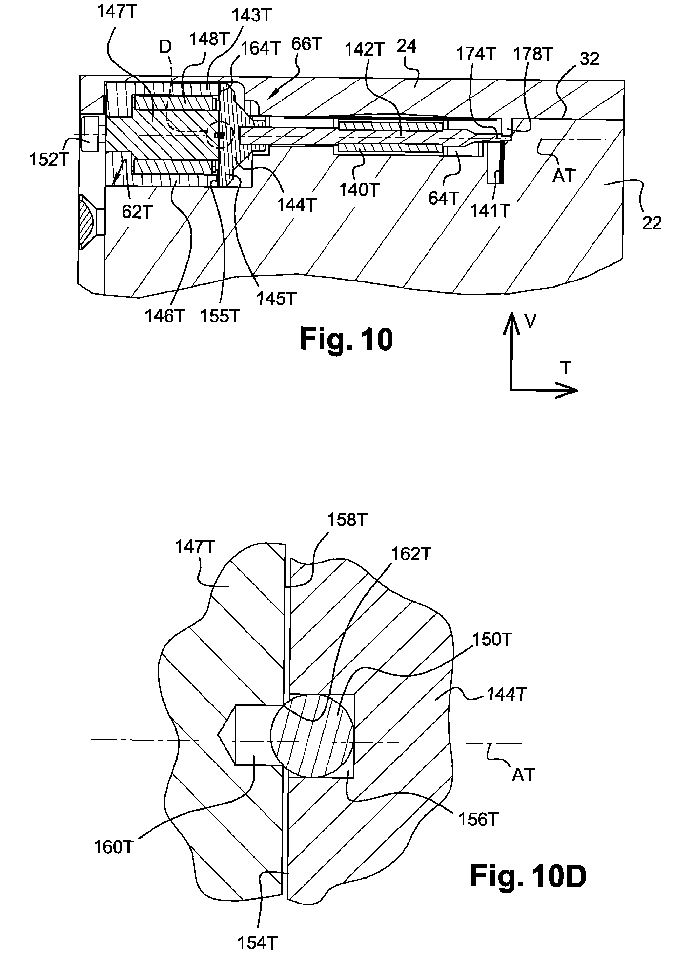

More precisely, as can be seen in Figure 10D, the rear transverse face 154L, 154T of the central portion of the rotor 144L, 144T comprises a rearward-opening tubular axial housing 156L, 156T which partially houses a spheroid 150L, 150T that is centred on the axis AT.

Opposite this, the front transverse face 158L, 158T of the core 147L, 147T comprises an axial drilling 160L, 160T which opens into the front transverse face and whose diameter is less than that of the spheroid 150L, 150T.

Thus, the front circular rim 162L, 162T rests on the spheroid 150L, 150T thus being able to pivot about the centre of the spheroid.

In the theoretically aligned position, the rear transverse face 155L, 155T of the teeth of the rotor is parallel with the front transverse face of the teeth of the stator and particularly with the front annular transverse face 164L, 164T of the teeth, thus delimiting between them an annular air gap whose axial thickness takes account of the clearance necessary for the rotor to rotate without friction with the poles of the yoke and the clearance necessary to allow the rotor to tilt about the spheroid forming the articulation ball-and-socket joint. The air gap is "external" here and contains ambient air.

The tubular yoke 146L, 146T is divided into four poles or teeth 143L, 143T like the periphery of the rotor 144L, 144T.

The number of teeth or poles is naturally not limited to four and may be chosen particularly according to the number of detents per rotation that may need to be created.

When the winding 148L, 148T is supplied by its connector wires 166L, 166T connected to the printed circuit board, the electromagnetic attraction of the rotor 144L, 144T by the tubular yoke 146L, 146T tends to angularly align the poles 143L, 143T of the yoke of the stator and the poles 145L, 145T of the rotor, while causing the rotor 144L, 144T and therefore the roller 140L, 140T to rotate in one direction or another according to the angular offset of the poles 143L, 143T-145L, 145T when the winding is switched on.

The external parts 146L, 146T are nested in the housings 62L, 62T and are held by horizontal screws 152L, 152T which traverse corresponding holes in the vertical plates 82L, 82T of the bottom metal cap 26.

More precisely, the yoke is the body of the stator and it is prevented from rotating and oriented at an angle to the casing by raised shapes 168L, 168T that are received in matching shapes like matching hollows 170L, 170T of the casing 22 and 171L, 171T of the cover 24.

The fastening screws 152L, 152T press the rear transverse faces 153L, 153T of the yokes against the side plates 82L, 82T that thus constitute cooling heat sinks of the electromagnetic stators. This mechanical fastening method provides good thermal conductivity with the metal cap for dissipating the calories produced by the winding 148L, 148T of the generator. To improve the thermal conductivity, it is also possible to provide a "thermal" paste on the interface between the faces 153L, 153T of the yokes and the plates 82L, 82T.

It is thus possible to apply a tactile effect or sensation to the ball 30 and to do so irrespective of the position and orientation of the movements of the ball, and also irrespective of the operation of the means of detecting the rotation of the ball 30.

Each roller 140T is permanently pressed against the surface 31 of the ball 30 by an elastic pin 141 L, 141 T.

Each roller is, for example, made of elastomer. The choice of the material forming the roller depends on that of the peripheral layer of the ball, that is to say that a pair of materials, hard ball - soft roller, or else, for example, soft ball - hard roller, is chosen in order to ensure an appropriate friction between the roller and the ball.

The shaft 142L, 142T is guided in rotation in the casing, on the one hand, by the rear rotor 144L, 144T with the articulation spheroid 150L, 150T and, on the other hand, by its front free end 174L, 174T that is guided in rotation in a horizontal slot delimited partly in the casing 22 by a hollow shape 176L, 176T and in the cover 24 by a vertical leg 178L, 178T.

Thus, each front end 174L, 174T may slide in the horizontal plane common to the two axes of rotation AL, AT of the shafts and of the generator rollers and it is elastically forced towards the ball 30 by the associated elastic pin 141 L, 141T.

The movements of each shaft 142L, 142T of the tactile sensation generator cause a pivoting or tilting about the centre of the spheroid 150L, 150T, but the "total" axial air gap remains globally constant between the two series of four poles 145L, 145T of the rotor and 143L, 143T of the stator and correspond to the average axial air gap equal to 0.12 mm when the axis AL, AT is in line.

The spheroid 150L, 150T thus provides a ball-and-socket connection or articulation between the stator and the rotor to which the shaft 142L, 142T is attached to allow effortless angular clearances on the shaft.

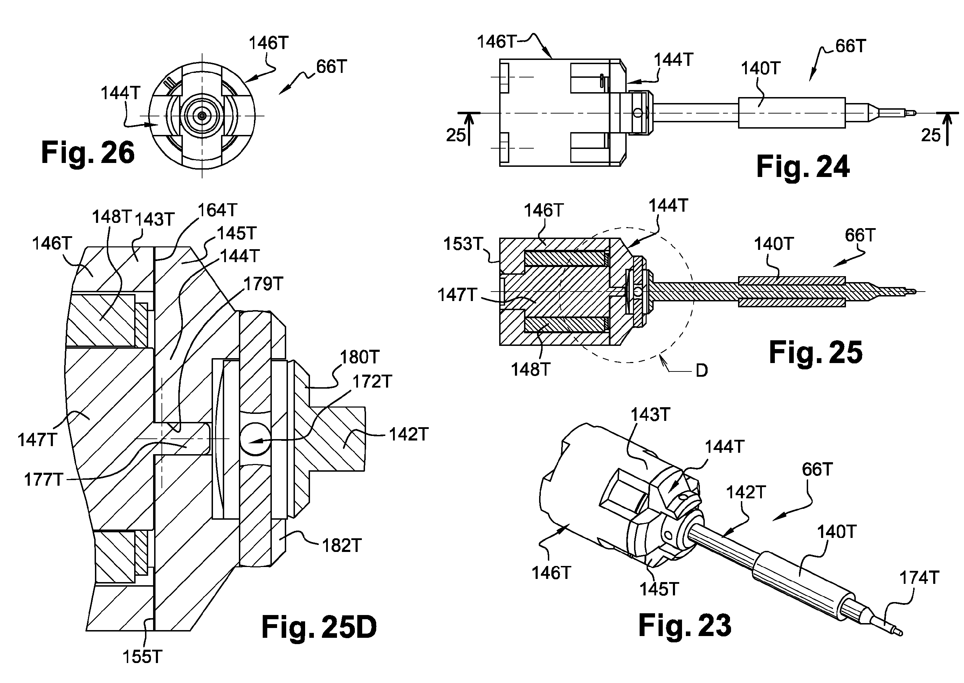

The second embodiment of the tactile sensation generator illustrated in Figures 23 to 26 makes it possible to provide better guidance in rotation of the front roller 140L, 140T with its shaft 142L, 142T and its rotor 144L, 144T in order to ensure a minimal and virtually constant air gap between the rear faces 155L, 155T of the four teeth or poles 145L, 145T of the rotor and the front transverse faces 164L, 164T of the four poles or teeth 143L, 143T of the stator.

According to this design, the variations in inclination of the axis AL, AT of the rotor 144L, 144T are not "passed on" to the air gap and the value of the latter may be reduced considerably because it is no longer necessary to take account of the risks of the rotor tilting relative to the ball.

To minimize the value and the thickness variations of the air gap, the air gap is reduced and it is determined by a washer 173L, 173T of a thickness that is, for example, substantially equal to 0.05 mm. Controlling the value of the thus minimized air gap makes it possible to considerably improve the electromagnetic performance of the assembly.

Mechanical means of connection and guidance between the yoke of the stator and the rotor 144L, 144T consist of an articulation of the Cardan type in place of the spheroid 150L, 150T.

In this design of the electromagnetic means 150L, 150T, the spheroid is replaced by precise guidance in rotation in order to minimize the value and the thickness variations of the air gap. A connection via a miniature Cardan joint replaces the spheroid to provide the roller 140L, 140T with its freedom of angular movement (pivoting-tilting) on the ball 30.

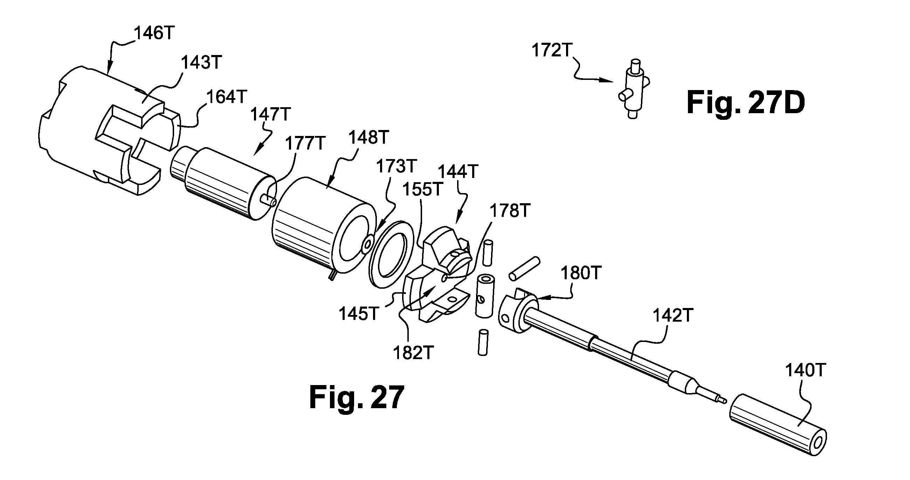

The cross-shaped trunnion 172L, 172T of the Cardan joint is represented in an imaginary manner in the form of a preassembled subassembly in Figure 27D so that its implementation can be better understood.

A washer 173L, 173T determines an air gap of constant axial thickness between the rear transverse face 155L, 155T of the teeth of the rotor 144L, 144T and the front annular transverse face 164L, 164T of the teeth of the tubular yoke 146L, 146T.

The yoke is guided in rotation about the axis AL, AT by a front trunnion 177L, 177T of the central core 147L, 147T, whose diameter is equal to 1.5 mm, that is received in an axial drilling 179L, 179T of the rotor, and whose diameter here is of the order of 1.5 mm.

The rear axial end of the generator shaft 142L, 142T is shaped like a clevis 180L, 180T in the same manner as the front face 182L, 182T of the rotor 144L, 144T and they receive the trunnion 172L, 172T to form the Cardan articulation joint.

In the first two embodiments of the generator, the air gap is made of two parts.

A first part consists of a "useful" air gap consisting of the space between the flat end faces 164L, 164T of the four teeth 143L, 143T of the stator and the flat end faces 155L, 155T of the four poles or teeth 145L, 145T of the rotor.

This air gap is situated in a plane perpendicular to the axis of the electromagnetic system. The rotation of the rotor 144L, 144T will induce great variations in this air gap and the value of the magnetic flux, passing between the poles 143L, 143T of the stator and the poles 145L, 145T of the rotor, will vary in a virtually sinusoidal manner according to the angular offset between the poles of the stator and those of the rotor. It is this variation of flux that produces the "detent" effects transmitted by the roller to the ball and that constitute the tactile sensations transmitted to the user's hand.

In the first embodiment, the variations of the air gap due to the pivoting or tilting of the rotor about the spheroid produce variations of flux that are not connected to the angular offset of the poles and that constitute a "noise" that may reduce the detent effect. Furthermore, it is necessary to increase the axial thickness of the air gap to allow the rotor to tilt about the spheroid and such an increase may substantially reduce the value of the magnetic flux that can be channelled by the teeth or poles and therefore reduce the detent effect.

The air gap comprises a second, "unuseful or harmful" part consisting of the space between the end of the central core 147L, 147T of the stator (in which the magnetic flux channelled by the four teeth or poles 145L, 145T of the rotor 144L, 144T is enclosed) and the central part facing the rotor.

This second part of the air gap, which participates in the saturation of the magnetic circuit, does not participate in the detent effect because the rotation of the rotor about its axis produces virtually no variation in this part of the air gap, except for that due to the tilting of the rotor about the ball in the first embodiment.

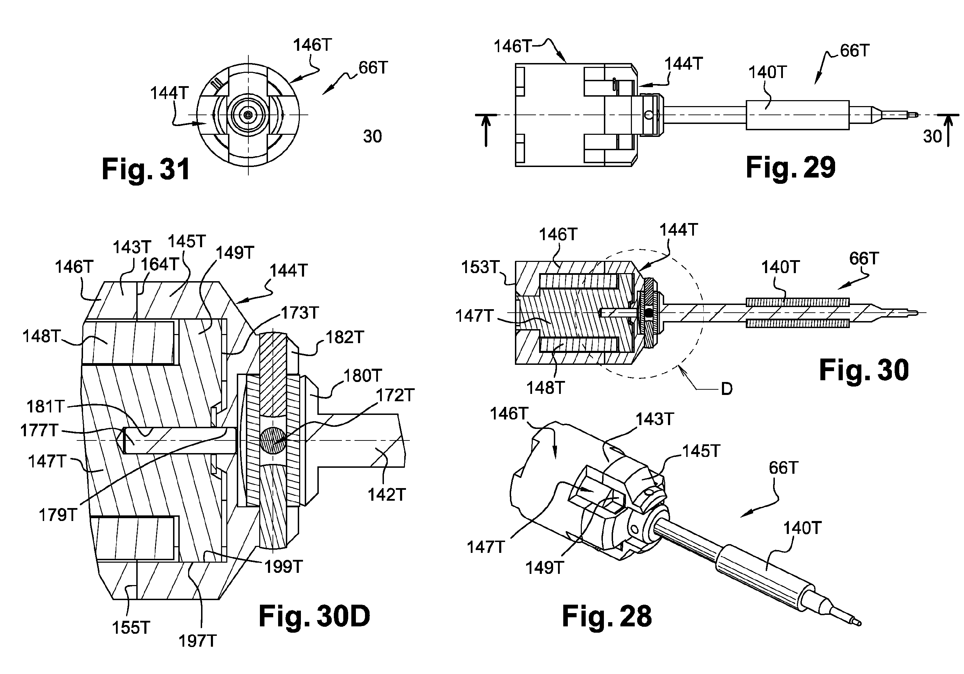

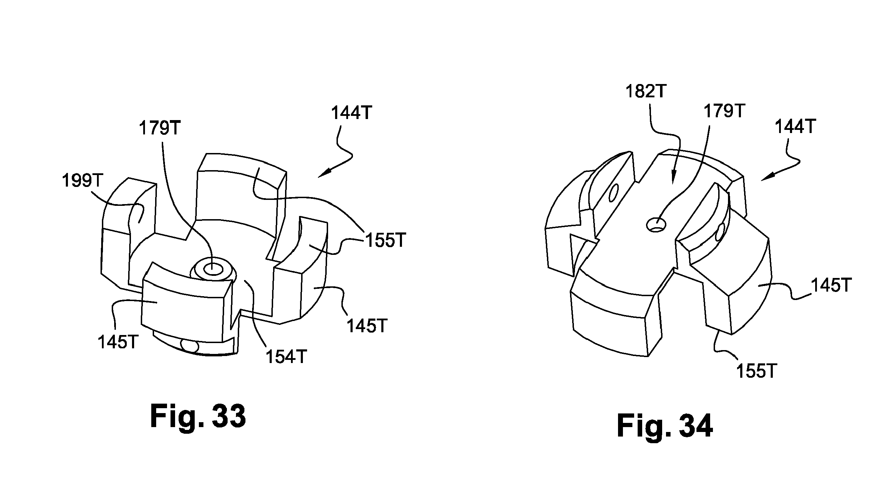

In the third embodiment of the tactile sensation generator illustrated in Figures 28 and 34, the air gap comprises two "useful" parts.

Accordingly, the front end 158L, 158T of the core 147L, 147T here comprises four teeth or poles 149L, 149T that extend radially outwards and the four teeth or poles 145L, 145T extend axially rearwards towards the poles 143L, 143T of the annular yoke 146L, 146T to interact with the four poles 149L, 149T.

Thus, in this embodiment, the air gap comprises two "useful" parts including a first part, or first air gap, identical to that previously mentioned between the poles 143L, 143T and 145L, 145T.

The second "useful" part, or second air gap, is between four outer convex cylindrical faces 197L, 197T of the four poles 149L, 149T of the core 147L, 147T of the stator and the four inner concave cylindrical faces 199L, 199T of the four poles 145L, 145T of the rotor.

Thus, in the same space requirement and with the same number of parts, the number of poles of the third embodiment participating in the detent effect is doubled relative to the two preceding embodiments.

The "unuseful" air gap is eliminated and is replaced by that created by the space between the cylindrical convex and concave faces of the poles.

The thickness and the total surface area of the "cylindrical" air gap of the third embodiment are of the same order of magnitude as those of the "unuseful" air gap. The values of the magnetic flux passing through the magnetic circuits of the second and third embodiments are therefore identical, all other things being equal. Thus the detent effect obtained by means of eight poles is twice that obtained previously with four poles.

The removal of the "unuseful" air gap eliminates the corresponding axial attraction force between the front axial end of the central core of the stator and the central portion of the rotor. All that remains is the longitudinal attraction force between the teeth of the rotor and those of the stator. The resultant of these radial attraction forces of the poles with concave and convex cylindrical end faces is zero. Thus the overall axial attraction force of the third embodiment is approximately half that of the second embodiment. The friction torques of the rotor on the stator core are therefore halved, which further improves the detent effect.

The rotor is guided in rotation about the axis AL, AT by a trunnion 177L, 177T of the central core 147L, 147T, that is received in an axial drilling 179L, 179T of the rotor and in an axial drilling 181L, 181T of the stator core.

The washer 173L, 173T determines the value of the axial air gap.

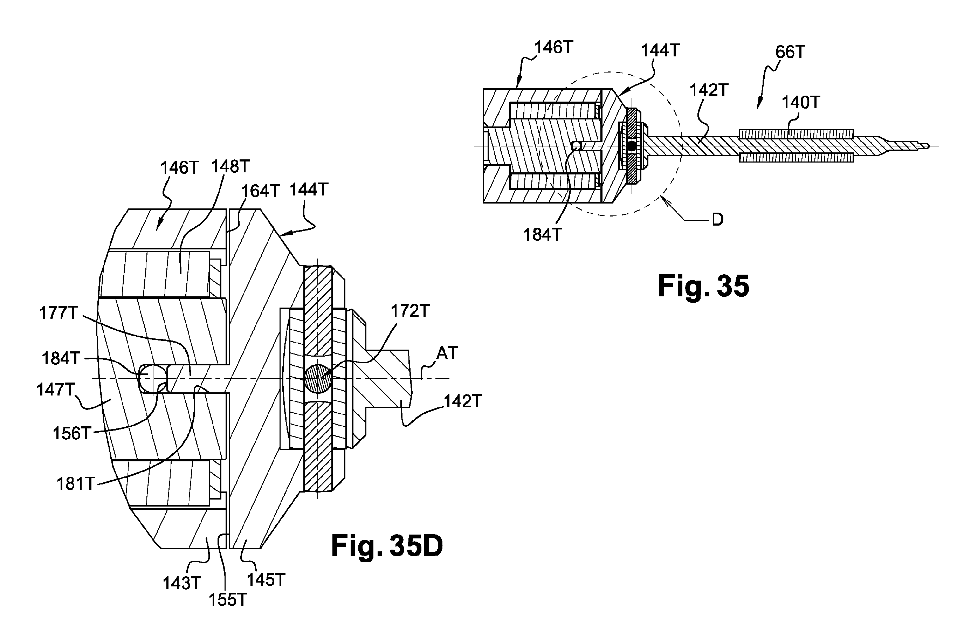

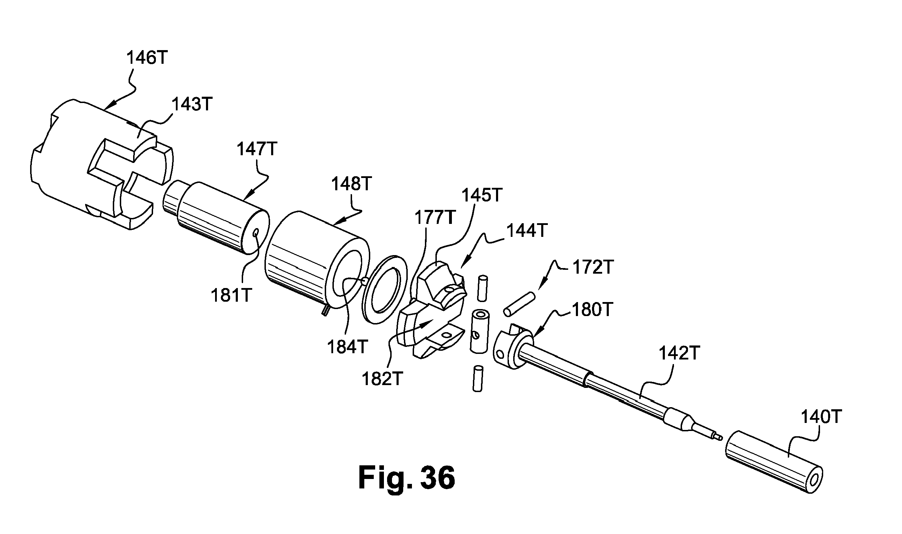

Figures 35, 35D and 36 to 38 illustrate a fourth embodiment of the tactile sensation generator that is derived from the second embodiment and in which the washer 173L, 173T, providing the operating clearance at the flat air gaps perpendicular to the axis of the system, is eliminated.

A spheroid 184L, 184T whose diameter is equal to approximately 1.5 mm is placed at the bottom of the drilling 181 L, 181 T of the central core of the stator.

The rear axial end 186L, 186T of the trunnion 177L, 177T for guiding the rotor in rotation butts against the top of the spheroid 184L, 184T to maintain the operating clearance at the flat air gaps.

The advantage of this solution is to minimize the spurious friction torque, since, when the rotor rotates, the frictions over the whole surface of the "air gap" washer are eliminated when the latter is absent, and are replaced by the friction of the flat end 186T, 186L of the trunnion on the top of the spheroid 184L, 184T. Since the friction point is situated on the axis of rotation, the torque created by this friction is virtually zero, thereby improving the detent effect.

The trunnion 177L, 177T is advantageously made of nonmagnetic material and force-fitted into the rotor in order to prevent a magnetic sticking phenomenon between the axial drilling 181 L, 181 T and the trunnion which would impair the tactile effect produced.

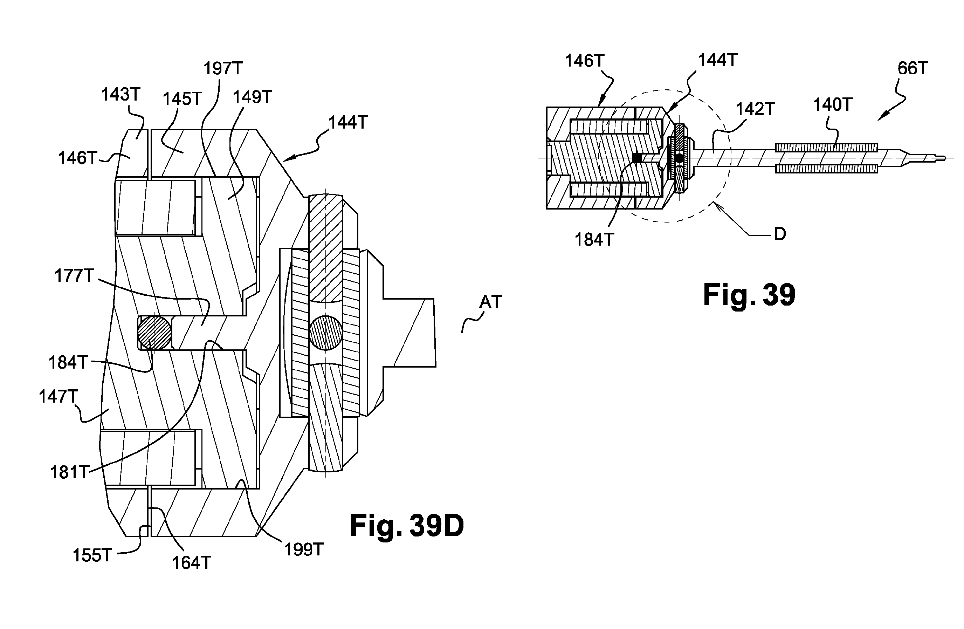

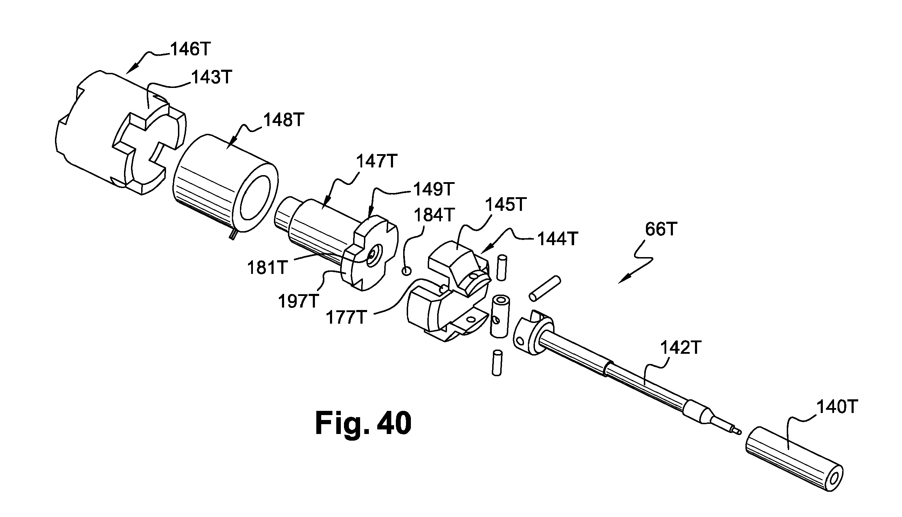

Figures 39, 39D and 40 illustrate a fifth embodiment of the tactile sensation generator derived from the third embodiment in which, as in the fourth embodiment, the washer providing the operating clearance between the stator and the rotor is removed and replaced by a spheroid 184L, 184T.

This solution reduces, in the same manner, the friction torques in rotation to improve the detent effect.

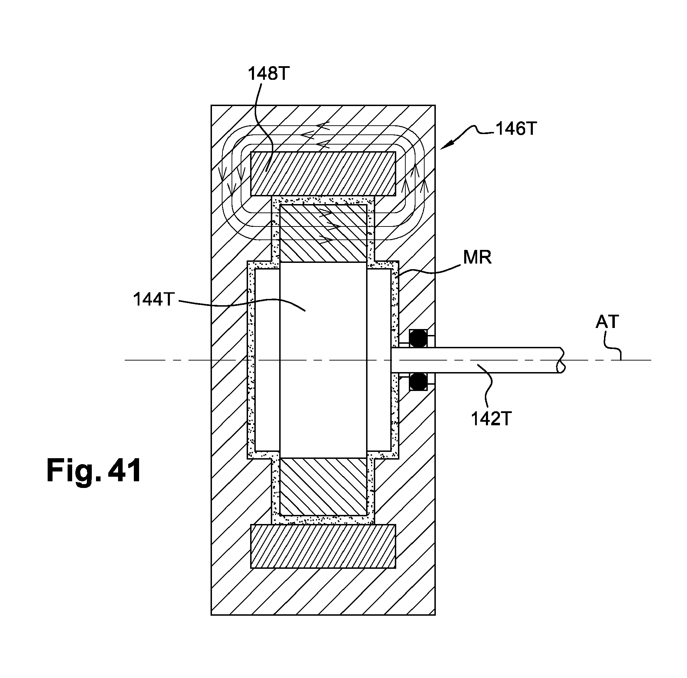

According to a final embodiment represented schematically in Figure 41, it is possible to use electromagnetic means in which the stator 144T is received in a sealed manner in the stator 146T and in which the stator contains a magneto-rheological fluid called an MR fluid.

Such a fluid has the property of possessing a viscosity that varies from a very fluid state to a very viscous state in a few milliseconds when the fluid is subjected to an electromagnetic field.

The air gap is filled by the MR fluid. The assembly thus forms a "coupler" whose torque opposing the rotation of the rotor depends on the viscosity of the MR fluid.

The annular winding 148T shown in Figure 41, with its axis AT, produces a "toric" flux, illustrated by the arrows, that axially traverses successively the two annular magnetic air gaps of the annular hatched periphery of the rotor 144T, the central unhatched part of the rotor not being made of magnetic material.

For different applications or modes of use, it may be desirable to prevent one roller 140L, 140T from rotating and therefore to partially stop the rotation of the ball in a corresponding manner, for example to convert it into a "roller" that can generally rotate only about a horizontal axis.

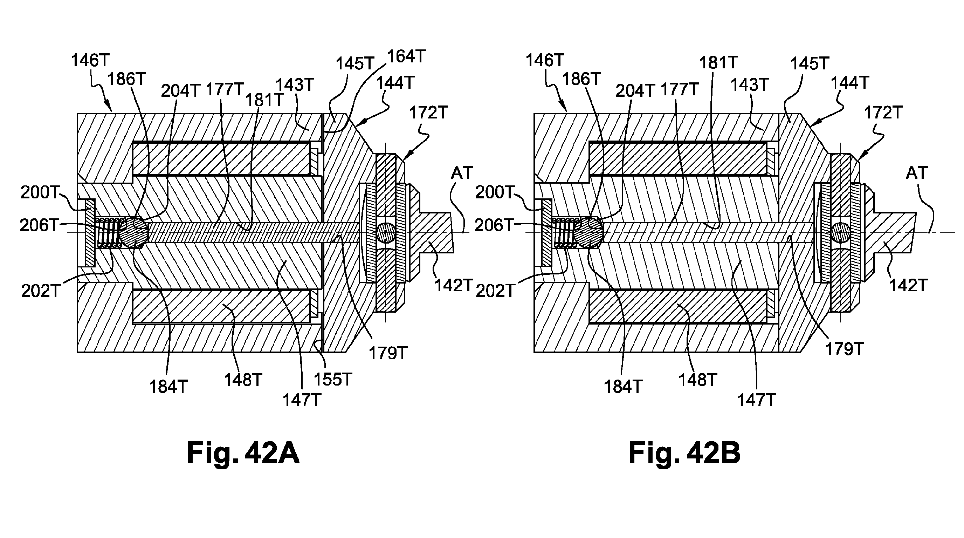

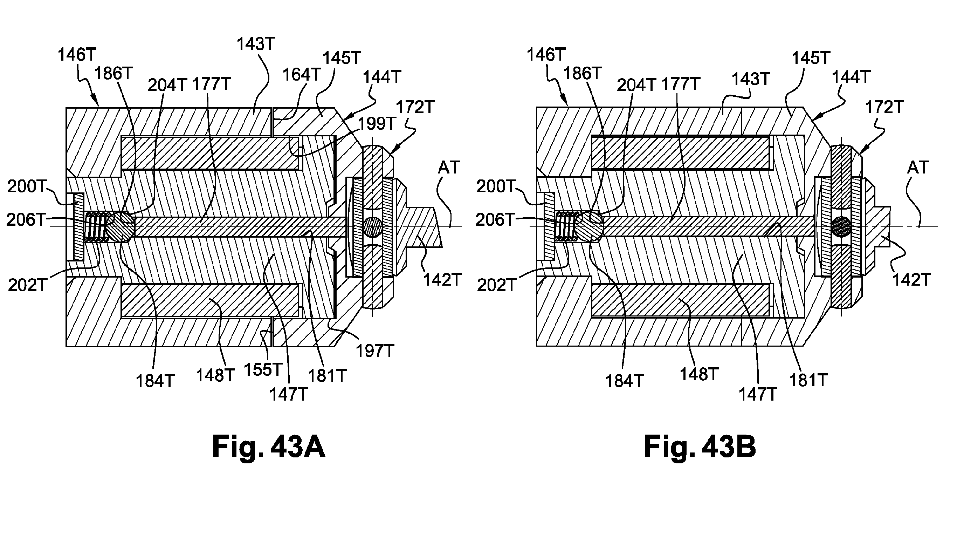

Accordingly, the variant embodiments illustrated in Figures 42A, 42B, 43A and 43B illustrate a design that makes it possible to stop the rotation of the rotor 144L, 144T that is fixedly attached in rotation to the shaft 142L, 142T, and therefore the roller 140L, 140T.

The stopping of the rotor is obtained by a magnetic sticking effect of the rotor 144L, 144T on the stator, and, more particularly, on the yoke 146L, 146T, reducing to zero the axial value or thickness of the air gap between the transverse faces opposite the series of poles or teeth 145L, 145T and 143L, 143T of the rotor and of the yoke respectively.

Accordingly, the rear axial end, to the left when looking at the figures, of the trunnion 177L, 177T is pressing axially rearwards, via a spheroid 184L, 184T, against a fixed abutment piece 200L, 200T, with axial interposition of a compression coil spring 202L, 202T that is mounted compressed between the piece 200L, 200T and the spheroid 184L, 184T.

In the normal position of use, that is to say when the rotor and the yoke are not "stuck", the spring 202L, 202T provides a pre-load or pre-stress, axially forwards - that is to say towards the right when looking at the figures - on the spheroid 184L, 184T that is pressing axially forwards against a corresponding front abutment surface 204L, 204T of the central core 147L, 147T, the stiffness of the spring being such that the spheroid 184L, 184T forms a fixed abutment for the rod or trunnion 177L, 177T, and therefore for the rotor 144L, 144T thus determining the value of the axial air gap between the facing teeth 143L, 143T and 145L and 145T.

Against the elastic force exerted by the spring 202L, 202T, the spheroid 184L, 184T is likely to slide axially, rearwards from the positions illustrated in Figures 42A and 43A, towards the inside of the cylindrical housing 206L, 206T that houses the spring and the spheroid.

So long as the value of the electromagnetic force Fai of axial attraction exerted on the rotor by the teeth of the stator is less than the value Fp of pre-stress exerted by the spring of the spheroid, the latter remains fixed pressing axially forwards against the surface 204L, 204T.

The operation of the tactile sensation generator is then similar to what has been previously described.

When the value of the axial attraction force exerted on the rotor reaches a value Fas greater than Fp, the spheroid is subjected to a resultant force Fas - Fp that is directed axially from the front to the rear and the spheroid then leaves its contact with the surface 204L, 204T to slide axially rearwards inside the housing 206L, 206T, until the air gap between the teeth becomes zero to culminate in the position called the "sticking" position illustrated in Figures 43A and 43B.

Due to the zero value of the air gap, the attraction between the stator teeth and that of the rotor then becomes very great and the result is that the rotor stops rotating relative to the stator due to the friction that exists between the transverse faces, now in contact, of the teeth.

This friction may be increased by providing an appropriate coating, not shown, of these teeth faces.

In the sticking state obtained, thanks to the fact that the air gap is now zero, the intensity of the supply current of the winding may be reduced considerably, while retaining the sticking effect.

Thus to "stop" the rotation of a tactile sensation generator, a brief pulse of high current is sent to the winding making it possible to obtain an attraction force Fas greater than Fp and to thus result in the sticking. Then, the value of the supply current to the winding is immediately reduced to a value lm, called the sticking retention value, that is a value less than is necessary, in "normal" operation of the tactile pulse generator.

Then the supply of current to the winding is interrupted to obtain the end of sticking, the air gap again being at its "nominal" value thanks in particular to the return effect exerted by the spring 202L, 202T on the spheroid 184L, 184T and therefore on the rod 177L, 177T and therefore the rotor 144L, 144T which moves axially forward relative to the stator, and therefore relative to the yoke.

This design advantageously makes it possible to stop the rotation of the ball in one direction, even in all directions by "sticking" the two tactile sensation generators with less of an electric energy consumption and less of a temperature rise than in normal operation of the generators.

This is very important because, although the temperature rise and current consumption can be controlled by electronic control circuits in pulse mode, that is to say producing pulses by defining the shape and duration of each of the corresponding electric pulses, the same does not apply in permanent mode or semi-permanent mode - for stopping rotation - whose duration depends on the use.

Specifically, if the rotation of the ball is stopped about an axis to convert it into a control roller or drum rotating about a single axis, any stoppage time must then be equal to the time determined for the use of the device or navigator in this mode of use.

In control pulse mode, it is possible to amplify, in value of current, the electric pulses sent into a winding to produce high value tactile pulses or sensations.

For example, if the duration of the pulse is equal to a third of the period between two pulses, the current consumption and temperature rise will be equal to those of a direct current of intensity equal to a third of that of the pulse.

In "semi-permanent" mode, the cyclic duration factor is of the order of 100.

Generally for each tactile sensation generator, as for any electromagnetic component, its duty cycle factor is defined making it possible to characterize the heating factor of the winding and this is done particularly in order to prevent any heat damage or deterioration.

This duty cycle factor is expressed as a percentage equal to:

$$\frac{\text{On time} \times 100}{\text{On time} + \text{Off time}}$$

It is thus possible to determine the maximum value of electric energy applied to the winding and particularly so that the maximum value of the current is less in intermittent use than in continuous use.

According to a variant not shown, it is possible to include one or more permanent magnets in the magnetic circuit of a tactile sensation generator.

It is thus possible to make use of this magnetizing property for the central core with one magnetic pole of the permanent magnet situated on the side of the air gap and the other magnetic pole situated at the other end of the central core.

It is also possible to arrange for the yoke to be permanently magnetized in order to have one magnetic pole at the bottom of the yoke and the other opposite magnetic pole situated at the teeth or poles of the yoke.

It is even possible to arrange for the rotor to be permanently magnetized with one magnetic pole in the central portion of the rotor and an opposite pole on the faces of the teeth opposite the faces of the teeth of the stator.

The use of permanent magnetizations or permanent magnets advantageously makes it possible to increase the value of the tactile sensations, during the rotation of the ball, in excess of the maximum values possible according to the maximum current that can circulate in the winding.

On the other hand, it is naturally necessary to supply the winding in order to produce an electromagnetic flux cancelling out that of the permanent magnets, when no tactile sensation is desired.

In international application WO-A1-02/075641, a proposal has already been made to produce the sealing and cleaning means of the ball in the form of a subassembly comprising a metal cup fitted into a matching housing formed in the top open face of the casing, the cup housing a stack of various layers of materials such as felt and "Teflon" (tetrafluoroethylene).

Such a cleaning and sealing subassembly or cartridge may also be a removable element that can be replaced.

The cup forming a casing is then held in its housing by the cover of the device.

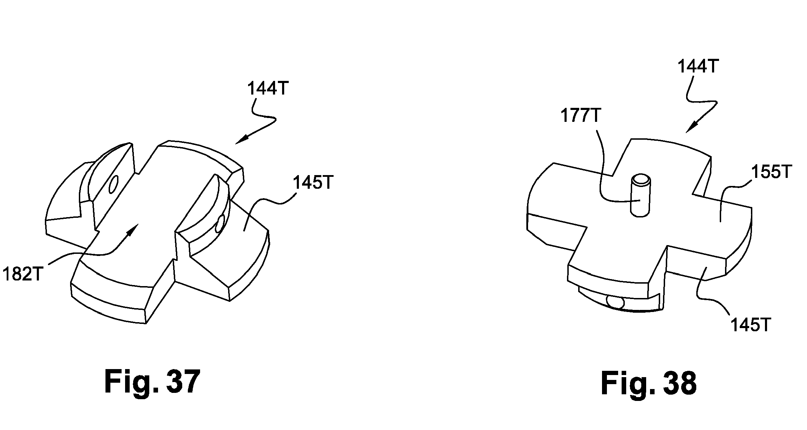

Note in particular Figures 37 to 43 of the document and the part corresponding to its description.

Sealing means are again provided in the device 20, particularly to prevent foreign bodies, and particularly dust, from entering the device and more particularly the cavity 40.

The sealing means also have the function of cleaning the surface 31 of the operating ball 30 during the rotary movements of the latter about its axis.

Because the ball 30 can move vertically relative to the casing 22 and therefore relative to the cover 24, the design of the sealing means must take account of this ability to move, on the one hand, by not opposing it and, on the other hand, by maintaining the sealing function irrespective of the vertical position of the ball 30 relative to the casing 22 and its top cover 24.

In the embodiment illustrated in Figures 2 and 3, the sealing means consist of a top elastic washer 300, for example made of metal, and an intermediate washer 302, for example made of "Teflon ®" - polytetrafluoroethylene - and a bottom washer 304 for example made of metal.

The bottom "rigid" washer 304 is placed at the bottom of the recess 306 of the casing to form a complete annular support and bearing surface to the other two washers.

The intermediate flexible washer 302 with a thickness equal, for example, to 0.1 or 0.2 mm performs the function of a wiper seal over the whole peripheral spherical surface of the ball, at the base of its portion protruding from the cover 24.

The top elastic washer 300 is a toothed spring washer that exerts an elastic force directed vertically downwards over the whole periphery of the wiper seal which forms the intermediate washer 302.

Figure 8D1 represents a view in section of the sealing system and of the ball in the raised position or rest position, that is to say in the absence of depression of the ball, while Figure 8D2 represents the same elements in the lowered or depressed position of the ball 30.

The design of these sealing means is compatible with the vertical movement of the ball.

The rotation of the ball produces a self-cleaning effect of the surface 31 of the protruding portion of the ball.

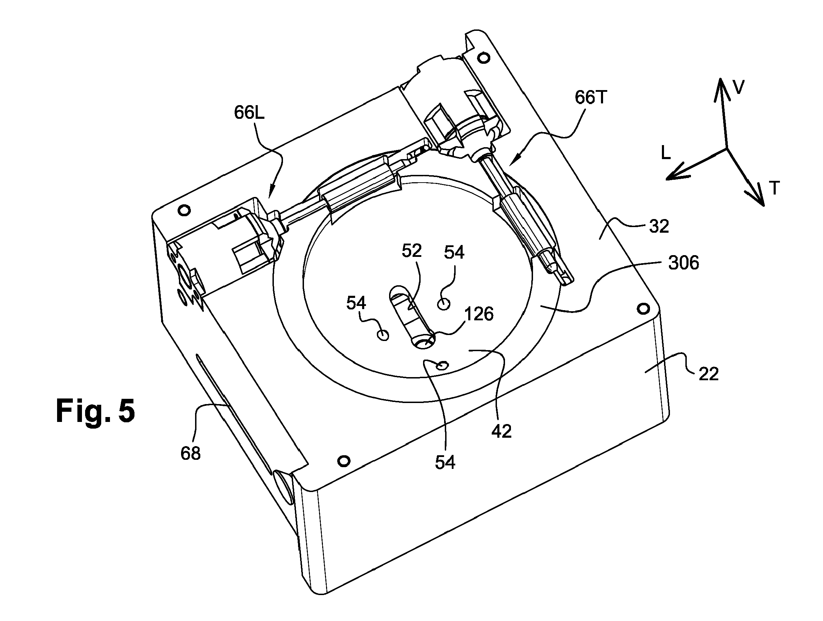

The axial stack 300-302-304 is here received and positioned in a matching annular housing or recess 306 formed in the top face 32 of the casing 22 that can be seen in Figure 5.

The matching housing 308 is formed in the bottom face of the cover 24.

If a liquid enters or condenses in the cavity 40, it runs in the housing 44 and falls on the heat sink 26 that may cause its evaporation.

This stack of washers also forms a slight brake which prevents unwanted rotations of the ball 30 in the event of vibrations.

In addition, when the ball is depressed vertically for the purpose of a validation or selection action, the sealing means provide a controlled braking effect which prevents spurious rotary movements of the ball about its centre.

The rolling spheroids 56 may be replaced by sliding elements on which the ball slides instead of rolling.

## Claims

1. Control device (20) particularly for controlling the movements of a cursor on a screen of an electronic apparatus, comprising:

   - an actuation member (30) in the form of a spherical ball with a surface (31) capable of being manipulated by a user;
   - a ball casing (22) which delimits a concave face (42) that surrounds at least a portion of the ball (30) and that comprises a window (52) for light beams to pass through;

- elements (56), particularly rolling elements, for the guidance in rotation of the ball (30), that protrude through the said concave face (42) and on which the ball, when it is manipulated, rolls in order to rotate about its centre (C);
- a light source (112) to emit at least one incident light beam through the window (52) and towards the ball (30);
- and means (116, 124, 126) for capturing the image of the zone of the ball (30) illuminated by the beam;

**characterized in that**:

- the device (20) comprises at least one switch (60-94-96), particularly for validating a position of the cursor on the screen, on which the user is likely to act by depressing the ball (30); and
- the ball (30) is mounted so that it can move relative to the casing, along an axis of depression (AV) passing substantially through the centre (C) of the ball (30), to act on the validation switch by means of one of the said guide elements (56) that is interposed axially between the ball (30) and the member (60) for triggering the switch.

2. Device according to the preceding claim, **characterized in that** the elements for guiding the ball in rotation consist of three guide elements (56) that are situated substantially in one and the same plane orthogonal to the axis of depression (AV) of the ball and that are distributed angularly at 120 degrees about the axis of depression (AV).

3. Device according to the preceding claim, **characterized in that** it comprises three switches (60-94-96) on which the user is likely to act by depressing the ball (30) along the said axis of depression (AV), and **in that** each of the said three guide elements (56) is interposed axially between the ball (30) and the member (60) for triggering an associated switch.

4. Device according to any one of the preceding claims, **characterized in that** the axis of depression (AV) of the ball (30) passes through the said window (52).

5. Device according to the preceding claim, **characterized in that** the axis of depression (AV) of the ball (30) is common to the optical axis of the said means (116, 124, 126) for capturing the image of the illuminated zone of the ball.

6. Device according to any one of the preceding claims, **characterized in that** each element for guiding the ball (30) in rotation is a rolling guide spheroid (56).

7. Device according to any one of the preceding claims, **characterized in that** each guide element (56) that is interposed between the ball (30) and the member (60) for triggering the associated switch is guided so as to slide in the casing (22) in a direction parallel to the axis of depression (AV) of the ball (30).

8. Device according to the preceding claim, taken in combination with Claim 6, **characterized in that** each spheroid (56) is guided so as to slide in a tubular duct (54) of the casing.

9. Device according to any one of the preceding claims, **characterized in that** the electric switch, particularly for validating a position of the cursor on the screen, comprises at least two fixed contact pads (94, 96) and a trigger member (60) of generally convex shape that is elastically deformable, from a stable rest position, under the action of an axial depression force applied to the ball (30), to establish an electric connection between the two fixed contact pads (94, 96).

10. Device according to the preceding claim, taken in combination with Claim 6, **characterized in that** the trigger member (60) delimits a cavity in the shape of a hollow spherical cap (102) which receives a portion of the associated rolling guide spheroid (56).

11. Device according to one of Claims 9 or 10, **characterized in that** the fixed contact pads (94, 96) of each switch are supported by the top face of a printed circuit board (PCB1) that belongs to an optoelectronic module (53) comprising a light source (112) and the means (116, 124, 126) for capturing the image, and that is attached to the casing (22).

12. Device according to Claim 3, **characterized in that** the stiffnesses of the trigger members (60) of at least two of the three switches (60-94-96) on which the user is likely to act by depressing the ball (30) have different values so that the vertical action on the ball (30) is likely to then cause successively, and distinctly, the triggering of the said at least two electric switches.

13. Device according to Claim 1, **characterized in that** it comprises sealing means, to prevent foreign bodies from entering the device and to clean the surface (31) of the ball (30) during the rotary movements of the latter.

14. Device according to Claim 13, **characterized in that** the sealing means comprise at least one top elastic washer (300) that exerts an elastic force directed vertically downwards onto a flexible washer (302) that performs the function of a wiper seal on the surface of the ball (30) at the base of its portion emerging from the casing.

**15.** Device according to the preceding claim, **characterized in that** the means (116, 126) for capturing the image of the illuminated zone of the ball (30) notably comprise a lens (116) and an image sensor (124, 126).

**Fig. 1**

Fig. 2

**Fig. 3**

**Fig. 4**

Fig. 5

Fig. 6

EP 1 739 531 A1

**Fig. 7**

EP 1 739 531 A1

Fig. 8

EP 1 739 531 A1

Fig. 8D1

302    31    300    24

30

306

304

22

Fig. 8D2

30    31    24  300
                    306

309

304

22

Fig. 9

EP 1 739 531 A1

**Fig. 10**

**Fig. 10D**

Fig. 11D

Fig. 11

Fig. 12

Fig. 13

EP 1 739 531 A1

Fig. 14

**Fig. 16**

**Fig. 15**

**Fig. 17**

**Fig. 18**

**Fig. 19**

140T

174T

66T

142T

144T

148T

164T

150T

147T

164T

146T

T

**Fig. 20**

146T

168T

153T

168T

T

Fig. 21

Fig. 22A

Fig. 22B

Fig. 24

Fig. 25

Fig. 23

Fig. 26

Fig. 25D

172T

**Fig. 27D**

146T
143T
164T
147T
177T
148T
173T
155T
144T
178T
145T
182T
180T
142T
140T

**Fig. 27**

37

Fig. 29

Fig. 30

Fig. 28

Fig. 31

Fig. 30D

**Fig. 32**

EP 1 739 531 A1

199T

179T

144T

155T

145T

154T

145T

**Fig. 33**

182T

179T

144T

145T

155T

**Fig. 34**

146T 144T 66T 142T 140T

184T

**Fig. 35**

D

146T 148T 164T 144T

177T

184T 172T

147T AT

156T 142T

181T

143T 145T

155T

**Fig. 35D**

EP 1 739 531 A1

146T
143T
147T
148T
145T
177T
144T
172T
181T
184T
182T
180T
142T
140T

**Fig. 36**

EP 1 739 531 A1

155T

144T

177T

145T

**Fig. 38**

145T

144T

182T

**Fig. 37**

**Fig. 39**

**Fig. 39D**

Fig. 40

EP 1 739 531 A1

EP 1 739 531 A1

**Fig. 41**

**Fig. 42B**

**Fig. 42A**

Fig. 43A

Fig. 43B

**European Patent**
**Office**

## PARTIAL EUROPEAN SEARCH REPORT

**Application Number**

which under Rule 45 of the European Patent Convention EP 06 11 4892
shall be considered, for the purposes of subsequent
proceedings, as the European search report

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/164963 A1 (ONO TAKATOSHI ET AL) 26 August 2004 (2004-08-26) * paragraph [0032] - paragraph [0036] * * paragraph [0065] - paragraph [0067]; figures 1-3,9 * | 1-3,15 | INV. G06F3/033 |
| Y | EP 0 526 124 A (PICKER INTERNATIONAL, INC) 3 February 1993 (1993-02-03) * column 3, line 49 - column 4, line 14 * * column 5, line 5 - line 7; claims 1-3,10-12; figure 1 * | 1-8,15 | |
| Y | WO 02/058001 A (MCCAHON, STEPHEN, WILLIAM; LUNDQUIST, PAUL, B) 25 July 2002 (2002-07-25) * page 17, line 16 - page 18, line 18; claim 35; figure 9 * | 1-8,15 | |
| A | US 2004/036677 A1 (ONO TAKATOSHI ET AL) 26 February 2004 (2004-02-26) * paragraph [0026]; figure 1 * | 1,2,6,15 | |

-/--

| | | | |
|---|---|---|---|
| | | | TECHNICAL FIELDS SEARCHED (IPC) |
| | | | G06F |

## INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| Berlin | 19 June 2006 | Durand, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C07)

**European Patent Office**

**PARTIAL EUROPEAN SEARCH REPORT**

Application Number

EP 06 11 4892

| | DOCUMENTS CONSIDERED TO BE RELEVANT | | CLASSIFICATION OF THE APPLICATION (IPC) |
|---|---|---|---|
| Category | Citation of document with indication, where appropriate, of relevant passages | Relevant to claim | |
| A,D | WO 02/075641 A (ITT MANUFACTURING ENTERPRISES INC; BRICAUD, HERVE; FERRATON, DAVID) 26 September 2002 (2002-09-26) * page 4, line 13 - page 5, line 26 * * page 13, line 1 - line 11 * * page 15, line 15 - line 22 * * page 21, line 1 - page 22, line 20 * * page 25, line 13 - page 29, line 17; figures * ----- | 1,9-11, 13,14 | |
| A | WO 02/03369 A (LOGITECH, INC) 10 January 2002 (2002-01-10) * page 8, line 3 - line 20 * * page 25, line 6 - line 16 * * page 27, line 18 - line 25; figures 2,7-9,20,21 * ----- | 1,2,4-6, 11,13,15 | |

**TECHNICAL FIELDS SEARCHED (IPC)**

EPO FORM 1503 03.82 (P04C10)

European Patent
Office

INCOMPLETE SEARCH
SHEET C

Application Number

EP 06 11 4892

the description exposes details concerning the optical sensing and the
means for generating haptic feedback which are not related to the claimed
invention. Therefore the search has been limited to the combination of
the ball guidance associated with the validation switches actuated by
depressing the ball as claimed in the original claims.

-----

**ANNEX TO THE EUROPEAN SEARCH REPORT
ON EUROPEAN PATENT APPLICATION NO.**                EP 06 11 4892

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2006

| Patent document cited in search report | | | Publication date | Patent family member(s) | | | Publication date |
|---|---|---|---|---|---|---|---|
| US 2004164963 | A1 | | 26-08-2004 | NONE | | | |
| EP 0526124 | A | | 03-02-1993 | DE | 69222489 | D1 | 06-11-1997 |
| | | | | DE | 69222489 | T2 | 05-02-1998 |
| | | | | JP | 7191801 | A | 28-07-1995 |
| | | | | US | 5237311 | A | 17-08-1993 |
| WO 02058001 | A | | 25-07-2002 | AU | 2002243578 | A1 | 30-07-2002 |
| | | | | US | 2002145588 | A1 | 10-10-2002 |
| US 2004036677 | A1 | | 26-02-2004 | JP | 2004038368 | A | 05-02-2004 |
| WO 02075641 | A | | 26-09-2002 | CN | 1496532 | A | 12-05-2004 |
| | | | | EP | 1388119 | A1 | 11-02-2004 |
| | | | | FR | 2822271 | A1 | 20-09-2002 |
| | | | | TW | 571225 | B | 11-01-2004 |
| | | | | US | 2004095324 | A1 | 20-05-2004 |
| WO 0203369 | A | | 10-01-2002 | AU | 7308601 | A | 14-01-2002 |
| | | | | DE | 10132645 | A1 | 24-01-2002 |
| | | | | DE | 20111181 | U1 | 15-11-2001 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 3407131 A

- WO 02075641 A1